(19) Europäisches Patentamt

European Patent Office

Office européen des brevets

(11) EP 1 327 940 A1

(12) **EUROPEAN PATENT APPLICATION**

(43) Date of publication:
16.07.2003 Bulletin 2003/29

(51) Int Cl.7: G06F 17/30, H04L 29/08

(21) Application number: 02000533.6

(22) Date of filing: 09.01.2002

(84) Designated Contracting States:
AT BE CH CY DE DK ES FI FR GB GR IE IT LI LU
MC NL PT SE TR
Designated Extension States:
AL LT LV MK RO SI

• Röhrle, Klaus, c/o Sony Internat. (Europe) GmbH
70327 Stuttgart (DE)
• Treiner, Jörg, c/o Sony Internat. (Europe) GmbH
70327 Stuttgart (DE)

(71) Applicant: Sony International (Europe) GmbH
10785 Berlin (DE)

(72) Inventors:
• Schramm, Oliver,
c/o Sony Internat. (Europe) GmbH
70327 Stuttgart (DE)

(74) Representative: Rupp, Christian, Dipl.Phys. et al
Mitscherlich & Partner
Patent- und Rechtsanwälte
Sonnenstrasse 33
80331 München (DE)

(54) **Server-side framework for personalised mobile services**

(57) The underlying invention generally relates to the field of Web technology, in particular to a server-side context-aware generation of information personalized for mobile users (104a). It especially includes context description (102b) and exchange schemes, adaptation techniques (102c) and architectural issues which are directed to a personalization (800c) and context-aware adaptation (102c) of document-based applications (102a) to the preferences of mobile users (104a) and the capabilities of their mobile computing devices (104b). In this context, the invention presents a sophisticated framework (3704) that supports the development of personalized mobile services. Thereby, said framework provides developers with general and specific processing modules (1200) to be applied to the current context (102b) of mobile users (104a) and service-specific information retrieved from specific content providers (108).

According to an embodiment of the underlying invention, said framework (3704) comprises a transformation pipeline (2410) consisting of at least one adapter module (1100) used for retrieving specific XML documents (102a) requested by mobile users (104), and at least one processing module (1200) used for an adaptation (102c) of said XML documents (102a). The input information (102a+b) of said adapter module (1100) and said processing module (1200) includes current context information (102b), content and style of the XML documents (102a).

*100*

FIG. 1

EP 1 327 940 A1

**Description**

FIELD AND BACKGROUND OF THE INVENTION

The underlying invention generally relates to the field of Web technology, in particular to a context-aware generation of information personalized for mobile users. It especially includes context description and exchange schemes, adaptation techniques and architectural issues which are directed to a personalization and context-aware adaptation of document-based applications to the preferences of mobile users, the capabilities of their mobile computing devices, and their current situation, e.g. comprising time, temperature or location. In this context, the invention presents a technology that supports the development of personalized mobile services. Thereby, said technology provides developers with general and specific processing modules to be applied to the current context of mobile users and service-specific information retrieved from specific content providers.

Before going into details about how information can be personalized, it should be made clear what personalization is, and why personalization and context-aware adaptation of document-based applications to the preferences of mobile users and the capabilities of their computing devices is so important for the future mobile Internet.

Nowadays, information retrieved from specific service providers is hardly personalized. Therefore, the user has to navigate through a mess of information in order to get the requested information if available at all. Due to the ever increasing physical size and complexity of Web pages that contain information like text, but also multimedia information such as images, video and audio, information can not be processed by means of mobile computing devices with limited display capability, process power and low-bandwidth connections.

Therefore, the quality of media presentation often needs to be adjusted according to the network bandwidth and the capabilities of those devices. Furthermore, the growing plenitude of multimedia information also calls for personalization of the multimedia presentation according to the user's individual preference. As a result, some challenging research issues were proposed to eliminate the mismatch between rich multimedia content and limited device capabilities. Context-based media adaptation technology is mainly concerned with selecting different qualities of single media types or selecting different media types, and then delivering information to different context, such as location, device capability, network bandwidth, user preference, etc. With media adaptation technology, multimedia information can be filtered, transformed, converted or reformed to make it universally accessible by different devices, and to provide personalized content to different users. Ideally, mobile devices could transparently adapt to the environment and their user's preference, providing adapted information and services to their users. In order to provide appropriate multimedia presentation to different devices, many issues from different aspects need to be addressed and integrated. These issues include:

- a so-called multimedia information model for the adaptation process,

- media authoring and processing techniques for said adaptation process,

- mechanisms for reliably detecting device capabilities and network bandwidth,

- standard approaches to describe and exchange context information,

- an adaptation agent that analyzes the context information, calculates the adaptation cost, and selects different adaptation strategies, and finally

- a framework to integrate all these technologies mentioned above.

Normally, the mobile user wants a tailored presentation in order to save time for navigation. Since most media objects (encompassing images, video and/or audio files) in current Web pages and multimedia applications are organized in an unstructured way, it is quite difficult to systematically organize the data and adaptively select the most appropriate level of presentation suitable for different context. For this reason, personalization and adaptation issues call for an enhanced multimedia information model which allows a context-specific adaptation to different multimedia contents.

Personalization of information will be the key technology for the next generation of smart mobile terminals. As broadband mobile Internet becomes reality, customers will expect access to information and services anywhere and anytime. They will then be able to demand information and services that meet their personal preferences. Thus, instead of browsing for information, a mobile user will be able to retrieve information which is personalized to his/her preferences, mobile device characteristics and his/her current situation, e.g. comprising time, temperature or location. Thereby, a media information model would be used to store, manage, select and deliver different variations of a media object in order to adapt multimedia information to the mobile devices of specific users, or to manipulate media objects "on-the-fly". Depending on the requirements of different multimedia applications, users will then be able to choose from a variety of standards (e.g. HTML, MHEG-5 and MHEG-6, SMIL, MPEG-7, etc.) for modeling multimedia content.

The object of techniques performing a personalization of information is to make information sites more responsive to the unique and individual needs of mobile users, and to make mobile users more effective by helping them to reach their goals. This can be accomplished in a number of ways. Some of them require an active involvement of the user (typically by filling out a form, or following a decision-tree set of questions). Other approaches operate behind the scenes, without relying on specific user inputs (e.g. by using cookies, or by looking at an IP address and providing content according to the browser capabilities of a specific user). For users, the desired result is the relevant content of a Web page, which appears more prominently on the site, while less relevant content may be moved to the background or dropped at all. There is a variety of personalization possibilities. In general, information can be personalized to all preferences of a user and his/her current situation (e.g. time, temperature or location), and that might be a lot.

For the time being, a server-side aggregation, personalization and rendering of requested information is likely to come since present smart mobile devices (SMDs) being able to provide a context-aware adaptation of document-based applications would have an increased power consumption. It might be that powerful clients take over the rendering step in the near future, but nevertheless the main focus of said personalization process will be part of the server side. With the aid of personalized mobile services, the generated information should give users a more convenient usage. This would lead to a synergy effect based on the fact that mobile users felt a great benefit while using these services.

BRIEF DESCRIPTION OF THE PRESENT STATE OF THE ART

In the field of said mobile services, a plurality of methods and technologies concerning customization issues closely related to the topic of the underlying invention has already been developed according to the state of the art. In order to understand the context of this invention, it is necessary to briefly explain the most significant features involved with said technologies.

In order to increase accessibility of multimedia information and to make a media adaptation possible, a plurality of media processing techniques can be employed. Today, a plurality of image-processing techniques is already used in several client systems to adapt the embedded images of Web pages according to the capabilities of the used client displays. Likewise, other important media processing techniques (e.g. text summarization and video-to-image transformation) can advantageously be applied to multimedia applications. In this context, media adaptation can be done based on

- network characteristics and/or mobile device capabilities,

- user preferences expressed by sepcific user requests, e.g. requests demanding a specific video sequence (thriller, documentary film, etc.), and

- the current situation of the user - encompassing time, temperature and/or location.

According to the respective adaptation context, media adaptation techniques can be divided into the following two categories:

- Media adaptation to a technical infrastructure: Technical infrastructure includes both device capabilities and network connections. Current mobile computing devices widely vary in their features (e.g. screen size, resolution, color depth, computing power, storage and software). They also use a variety of network connections ranging from cable to wireless, thereby requiring different bandwidths and network latencies. In this context, a media adaptation technology should be able to provide an appropriate presentation to different devices. For example, in order to display images on devices with small screens and limited display capabilities, reducing the size or resolution of each image would help.

- Media adaptation to user preferences: For a specific multimedia presentation, individual users may have different requirements on different levels. For example, given a medical tele-learning system, both a professor and a student are interested in a surgery, but the professor wants to get the in-depth multimedia material for his lecture, while the student only needs an abstraction of the same material to pass the upcoming exam.

When different media alternatives are created, media adaptation techniques can be divided into the following two categories:

- Static adaptation: At authoring time, multimedia formation is pre-processed and stored in multiple versions that differ in quality and processing requirements. At presentation time, the appropriate version will be selected depending on the context of the respective user. In order to eliminate an extra processing overhead at presentation time, most current Web sites create multiple versions of information at authoring time.

- Dynamic adaptation: Thereby, multimedia information is processed and delivered "on-the-fly", which means that available alternatives are determined for a specific context at presentation time. If there is not enough network bandwidth, less important data is removed, and a summarized content is presented to the user. The diversity of devices and network connections will make it difficult and expensive to separately create multimedia content for each individual type of device at authoring time. Moreover, the nature of network connections is not always known at authoring time. Hence, technologies that can dynamically adapt multimedia information to diverse client devices and network connections will become critical.

According to the media types involved in said adaptation, media adaptation technologies can be divided into the following two categories:

- Single media object adaptation: There is a plurality of current best-effort adaptation techniques that can be used for switching between different qualities or formats of single media objects. For example, most images can significantly be compressed without an appreciable decrease in quality. In this context, GIF-to-JPEG or color-to-grayscale transformations can be employed to simply reduce the physical size of an image.
- Cross-media adaptation: While single media object adaptation is limited to an inherent lower bound (e.g. the lowest acceptable technical quality of the respective media type), cross-media adaptation is the process of transforming the content from one media type to another in such a way that the content can be processed by a particular device. For instance, most handheld computing devices are not capable of handling video data due to their hardware and software constraints. Transforming video into sets of images and extracting audio or caption will enable the devices to access the information contained in the video. In this case, users will be able to receive useful information in any form their devices can handle.

According to the abstract presentation level, adaptation can be divided into the following two categories:

- Semantic Adaptation: In principle, semantic adaptation is a selective process. Based on available and requested information, multiple pieces of information are combined into a complete presentation. Semantic adaptation is affected by the semantic structure of a presentation, which determines the relative data in the final presentation. For example, most current e-commerce Web sites usually contain many images of banners, logos, and advertisements. These data often consume a good deal of network bandwidth, and are possibly redundant or not of interest to a user. If the semantic structure of a Web page can be defined at authoring time, a new version of said Web page can be generated by removing redundant objects, and the efficiency of information delivery will be improved.
- Physical adaptation: This form of media adaptation comprises conversion, scaling and distillation processes guided by the characteristics of media format and physical Quality of Service (QoS).

In order to adapt multimedia information to different context, it is important to gain an understanding of what context is. In general, context can be defined as any information that can be used to characterize the situation of any entity. An entity is a person, place, circumstance or object that is considered relevant to the interaction between a user and an application, including the user and applications themselves. This definition makes it easier for an application developer to decide the relevant context for a given application scenario. If a piece of information can be used to characterize the situation of a participant in an interaction, then that information is called context. According to this definition, almost any information available at the time of an interaction can be seen as context information. A categorization of context types will help application designers uncover the most likely pieces of context that will be useful in their applications. Furthermore, two general categories - human factors and physical environment - must be distinguished to structure the concept of context. Human factors include user information, social environment and tasks; the physical environment includes location, infrastructure and physical conditions. This categorization helps designers to choose and structure context to be used in their applications.

Applications that use context to provide task-revelant information and/or services to a user are the subject of the research field known as "context-aware computing". A system is context-aware if it uses context to provide relevant information and/or services to the user, where relevancy depends on the specific task of a user. The relevant context information can be classified into three categories: user preferences, technical infrastructure and the current situation of the respective mobile user. It can be used for a physical media adaptation as described above.

- User preferences include language preference, users' habits or physiological characteristics, etc. Thereby, user preference information can be specified by the user at the client side, complementary to perviously specified default preferences of said user (if available). Likewise, some personal intelligent software agents can advantageously be used to capture the potential habits of a user, which are sometimes not expressible.

- The technical infrastructure includes devices capabilities and network connection characteristics. Whereas a network connection and its effective bandwidth must be detected by dedicated network monitors, the capabilities of mobile computing devices can be specified by users of these devices.

- The current situation of a mobile user comprises context information like time, temperature and/or location.

For a context-based media adaptation, a universally applicable, extensible scheme is needed to describe said context information. This description can then be analyzed and used to guide the adaptation process. For several multimedia applications, this description scheme can be defined and implemented by system designers. However, for Web-based applications, the description scheme must be able to interact with current standards and protocols. Given a specific context description scheme, an exchange protocol is needed to deliver the context information of the respective user to the media sources or to the service provider as described in [CC/PP].

One important design issue is to decide where the adaptation resides. Adaptation operations can take place in the server, the proxy, the client or combinations thereof. Depending on the scenario, each design choice has its specific advantages and drawbacks. The main issues to consider include how deployable the system is, how efficient the utilization of bandwidth, CPU, and memory is, and how effective the adaptation is.

- In a server-based adaptation, the document server is responsible for analyzing the context profile and discovering network characteristics. It then selects the appropriate adaptation strategy. Using server-based adaptation has the advantage that it allows both static and dynamic adaptation. Since the content authors can preview the adapted result under different viewer preferences and conditions, the adaptation may have the best effect. Placing the adaptation on the server side also has drawbacks. For example, it complicates the implementation of an origin server and the algorithms for generating an appropriate presentation to a request, which results in an additional computational load and additional resource consumption on the server. The static approach generates multiple versions of the content, thus requiring more storage space.

- In a proxy-based adaptation, the client is connected with a proxy server, which decides and performs the adaptation on a server response, and then sends the transformed content back to the client. Adapting on a proxy server means that there is no need to change existing clients and servers. Thereby, the proxy server is able to transform an already existing multimedia content in such a way that said content does not have to be re-authored. Moreover, adapting on a proxy server reduces the computation load of the origin server. However, there is less author control on the outcome of the adaptation in a proxy server architecture, and it is difficult to determine what alternation "looks good" for any general content.

- A client-based adaptation mainly depends on the capability of the respective computing devices. In case of a client-based adaptation, a selection of the best representation is performed by the device after having received a response from the origin server. The selection is based on a list of the available representations included within said response. Although a client-based adaptation can advantageously be employed when the origin server is unable to determine device capabilities by examining the request, and public caches are used to distribute server load and reduce network usage, it suffers from the disadvantage of needing a second request to obtain the best alternate representation. This second request is only efficient when caching is used. Moreover, the adaptation is not transparent to the user.

Before information can be personalized, it has to be described in a machine-processable way. Thereby, the Extensible Markup Language (XML) is an approved language for describing said information. An XML-based document consists of

- a set of different elements,

- a hierarchical structure reflecting the relationship between different elements in one document, and

- a non-hierarchical structure for references between different elements.

These three properties are described in an XML Document Type Definition (DTD) or an XML schema, respectively. In order to gain more information on XML and XML schemata, the interested reader is referred to [XML] and [XMLSCHEMA].

On this level, XML supports the syntax and (to some extends) the semantics of media information since parties that interchange XML documents have to agree in a common set of element type names. Thereby, it might be the case that an element title has two different meanings in two different XML documents. Various organizations propose semantical definitions of XML elements, e.g. Dublin Core with the Dublin Core Qualifiers (see [DC]) or W3C with the so-called Resource Description Framework (RDF).

The following two sections give a brief description of further XML/RDF applications according to the state of the art used in the scope of the underlying invention.

a) Composite Capabilities and Preference Profile (CC/PP)

CC/PP is a Resource Description Framework (RDF) application. It defines a framework for defining XML vocabularies for describing user preferences and/or device capabilities. For example, the property that the screen of a mobile device has the size of 160 x 160 pixels can be described by means of said CC/PP framework. A resulting CC/PP description can be transferred to an origin server in different ways: by using the HTTP extension framework proposal as described in [HTTPex] or the Simple Object Access Protocol (SOAP) as described in [SOAP]. SOAP version 1.2 is a lightweight protocol which can be used for exchanging information in a decentralized, distributed environment. It is an XML-based protocol that consists of four parts:

- an envelope that defines a framework for describing what is in a message and how to process it,

- a set of encoding rules for expressing instances of application-defined data types,

- a convention for representing remote procedure calls and responses, and

- a binding convention for exchanging messages using an underlying protocol.

It can potentially be used in combination with a variety of other protocols.

b) Extensible Stylesheet Language Transformations (XSLT)

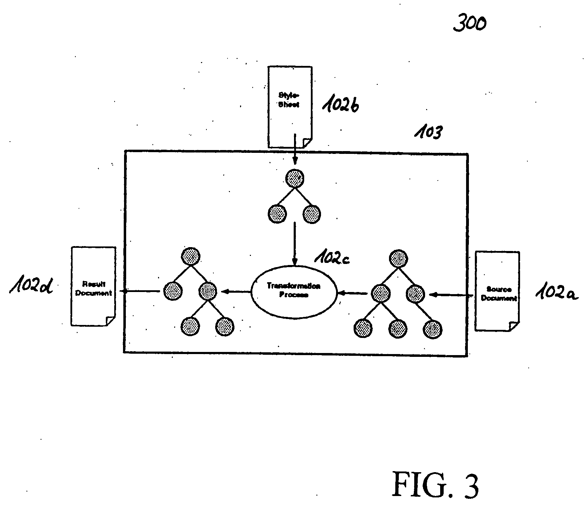

XSLT is the key technology applied to the XPortal 3704 according to the underlying invention as depicted in Fig. 3 for accomplishing the adaptation process 102c. In this context, an XML source document 102a is transformed into an XML target document 102d, and the transformation itself is described by means of an XML stylesheet, an also designated XSLT document, or an adaptation description 102b. XSLT is designed to be used as a part of XSL, which is a stylesheet language for XML. Despite the fact that XSLT is not intended to be a complete general-purpose XML transformation language, it has turned out that it is powerful enough for realizing the adaptation process 102c in said XPortal 3704.

The adaptation process 102c performed by said XPortal 3704 can also be realized in other transformation languages, e.g. in the Document Style Semantics and Specification Language (DSSSL). However, XSLT has been chosen for the sake of simplicity. In the scope of the underlying invention, XSLT is applied to the XPortal 3704 for two reasons:

- for transforming XML documents, received from the information providers of third parties, in a well-defined vocabulary and document structure used in the XPortal 3704, and

- for accomplishing a personalization 800c of content 102a requested by a specific mobile user 104a.

For more information on XSLT, the interested reader is referred to [XSLT].

c) JavaServer Pages (JSP)

JavaServer Pages (JSP) technology allows Web developers and designers to rapidly develop and easily maintain information-rich, dynamic Web pages that leverage existing business systems. As part of the Java family, JSP technology enables a rapid development of platform-independent Web-based applications. Thereby, JSP technology separates user 104a interfaces from content generation, which enables designers to change the overall page layout without altering the underlying dynamic content.

In order to encapsulate the logic that generates the content for a Web page, JSP technology uses tags and scriptlets written in the Java programming language. Additionally, the application logic can reside in server-based resources (e.g. in a JavaBeans component architecture) accessed by the Web page with the aid of said tags and scriptlets. Each formatting tag (HTML or XML) is directly passed back to the response page. By separating the page logic from its design and display and supporting a reusable component-based design, JSP technology makes it faster and easier than ever to build Web-based applications.

Together with Java Servlets, which can be used to extend the capabilities of a Web server with minimal overhead, maintenance and support, JSP technology provides an attractive alternative to other types of dynamic Web scripting technologies like Netscape, Server-Side JavaScript (SSJS) or Microsoft Active Server Pages (ASP). It offers platform independence, enhanced performance, separation of the logic from different display types, ease of administration, extensibility into the enterprise and ease of use. Moreover, JSP is not a proprietary technology of any vendor or any particular Web server.

For more information on JSP, the interested reader is referred to [JavaServer Pages].

d) XSLT in combination with JSP

In contrast to common programming languages, XSLT does not support updateable variables, which (under certain circumstances) may result in a complex transformation description, or (in the worst case) in different successively processed transformation descriptions. A further drawback is that functional extension mechanisms, bindings to external languages like Java and passing initialization parameters to an XSLT processor are presently not standardized. Said drawbacks can be fixed by a combined usage of XSLT and JSP technology. A JSP page generates an XSLT stylesheet which is based on various input parameters and results in a more problem-oriented specific transformation stylesheet.

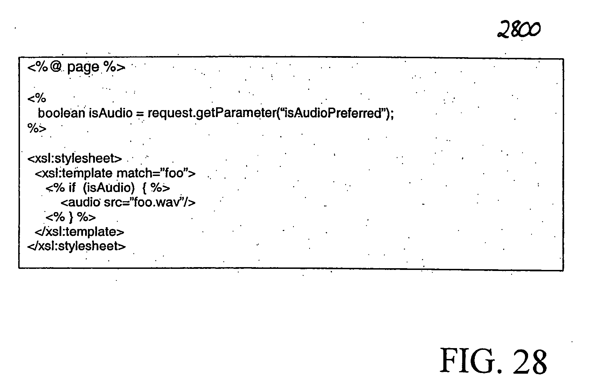

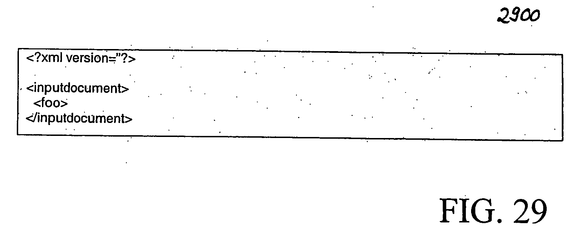

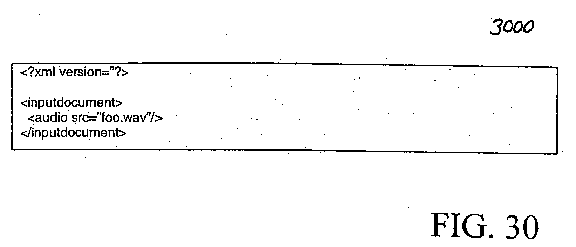

In Fig. 28, an example document 2800 is presented which shows how a combination of a JSP container 1200a and an XSLT processor 1200b/c/d can look like. Furthermore, Fig. 29 exhibits an example of a source document 2900 which is not adapted to the preferences of mobile users 104a and the capabilities of his/her mobile devices 104b. It can be transformed based on the generated XSLT stylesheet of the JSP page. An exemplary result document 3000 adapted to the preferences of mobile users 104a and the capabilities of his/her mobile devices 104b is shown in Fig. 30.

e) Model View Controller 2402 (MVC) Pattern

The MVC pattern is used in the XPortal 3704 according to the underlying invention to separate the presentation (the view) from the content (the model) and the controlling unit. The controlling unit receives requests from a mobile user 104a and triggers the processing (resulting in a personalization 800c of the data in the model and a preparation of the information in the view) according to the context 102b of the respective request (see below).

For more information on MVC patterns, the interested reader is referred to [MVC].

f) Pipe-and-Filter Pattern

The second pattern applied to the design of the XPortal 3704 according to the underlying invention is the pipe-and-filter pattern [PipeFilters]. A pipeline and their filters divide the task of a system into several sequential processing steps 900. These steps are connected by the data flow through the system in such a way that the output data of a step is the input to the subsequent step. In this context, each processing step 900 is implemented by a filter component.

Thereby, the role of said filter components is played by processing modules 1200 of a transformation pipeline 2410 realized by said XPortal framework 3704 (described below). They enrich data by computing and adding information, refine data by concentrating or extracting information, transform said data, and provide this information in another representation. A concrete filter implementation may combine any of these three basic principles.

In the following, the term "processing module" is chosen for describing elements of a transformation pipeline (instead of filters). According to [PipeFilters], processing modules are used as active filters, which means that they receive their input from a transformation pipeline and send their output down said transformation pipeline - in contrast to passive filters.

In the European patent application EP 00 122 560.6, a technique for accessing context information integrated in a service portal by means of a multi-user data network, a computer software product for implementing such a service portal, a method for supplying context information to a context database, and a computer software program for executing said method are disclosed. Said service portal comprises an access unit serving as a central entry point for different services of the network to access the common service portal, and a context database containing context information of mobile users, which is connected to said access unit in such a way that the context database is accessible for different mobile services in a uniform and controllable manner.

PROBLEMS ADDRESSED BY THE INVENTION

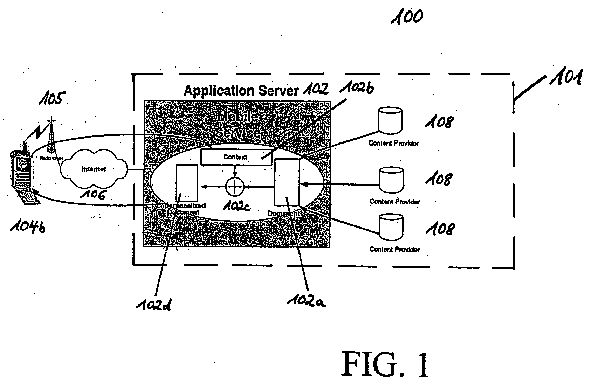

One aspect of the problem to which the underlying invention is devoted is shown in scenario 100 as depicted in Fig. 1. In this scenario, a mobile user 104a being "on the move" is browsing through the Internet 106, thereby using his/her mobile computing device 104b. The information is transmitted via different kinds of bearer services as given by Blue-tooth, WLAN, GSM/GPRS or HyperLAN/2. Thereby, mobile users 104a demand information personalized to their current situations (also known as "situation-oriented" information) and to their respective mobile computing device 104b.

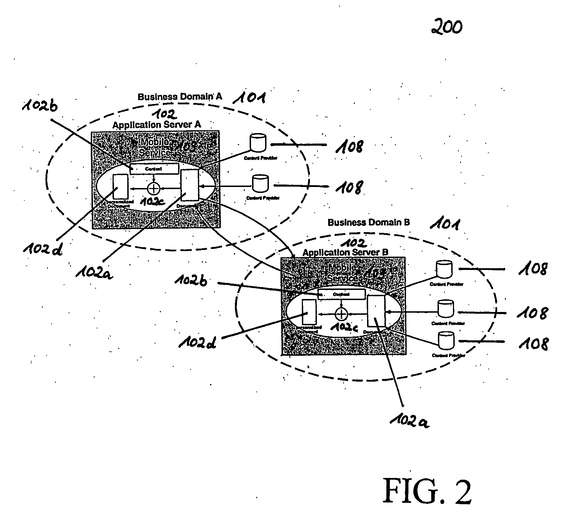

As shown in scenario 200 as depicted in Fig. 2, personalized information can also be used as input data for the mobile service of another application server 102. As shall be explained later, the difference to problem scenario 100 described above is simply the way said information is passed between the application servers 102 of two different business domains 101, designated with A and B.

In the following, several examples for typical problem scenarios 100 shall be given that will be explained by means of a sample service, designated as "cinema service". The idea of that sample service is that a user 104a who is "on the move" gets personalized information about the current cinema program dependent on his/her current location:

- From a presentation point of view, each user 104a has its preferred color, style and font size for a comfortable reading of information like text. Especially, users 104a with a specific handicap (e.g. in case a text is not visible due to identical colors of said text and its background) will be happy about the possibility to adapt the color of the presented information.

- From a navigation point of view, today's Wireless Access Protocol (WAP) terminal users 104a have to browse for information they are interested in. They have to navigate through different menus to find out that the information they are searching for is not available or possibly not up to date. In a personalized mobile service, the navigation should be replaced by a personalization process 800c in such a way that users 104a are informed about information they are interested in, or only when something happens related to their specific preferences.

- According to the preferences of a user 104a and his/her current location, future mobile services will be able to request the current cinema program based on the current location of a mobile user 104a. First, the information could be personalized in such a way that only movies are considered which fit to the personal preference of the mobile user 104a (e.g. an action movie). Accordingly, movies could be sorted dependent on their start time and based on the distance of the mobile user 104a to the respective cinema theatre. Concerning the presentation point of view, movies might be replaced by an image or text dependent on the mobile device 104b characteristics of the respective mobile user 104a.

Each user 104a has individual preferences - and these have to be fulfilled by a mobile service to be successful. In this context, personalization 800c should not be intermixed with customization. It should be differentiated between these two terms in the following way:

- The term "customization" refers to products which are under direct user control. This means that a mobile user 104a can explicitly select between certain options (e.g. a "portal" site with headlines from the New York Times or the Wall St. Journal allowing a user 104a to enter ticker symbols for the stocks he/she wants to track). A good example for customization is the Web browser myNetscape. For further information on this browser, the interested reader is referred to [myNetscape].

- By contrast, personalization 800c is driven by a computer that tries to provide a specific user 104a with individualized information based on the needs of said user 104a and his/her current situation.

In the scope of the underlying invention, customization information is used as part of the context 102b defined above.

OBJECT OF THE UNDERLYING INVENTION

In view of the explanations mentioned above, it is the object of the invention to propose a technology which supports personalization by means of context-aware adaptation of document-based applications (e.g. with embedded media objects) retrieved from specific content providers via mobile networks to the preferences of mobile users, the capabilities of their mobile devices and different application scenarios.

This object is achieved by means of the features of the independent claims. Advantageous features are defined in the dependent claims. Further objects and advantages of the invention are apparent in the following detailed description.

SUMMARY OF THE INVENTION

The proposed solution according to the underlying invention is basically dedicated to a personalization and context-aware adaptation of document-based applications to the preferences of mobile users and the capabilities of their mobile computing devices. In this context, the invention presents a sophisticated framework that supports the development of personalized mobile services. Thereby, said framework provides developers with general and specific processing modules to be applied to the current context of mobile users and service-specific information retrieved from specific content providers. For each user request, a set of processing modules is determined and a pipeline is built up in such a way that each processing module is able to access the current context as a part of its input information.

BRIEF DESCRIPTION OF THE CLAIMS

The independent claim 1 and the dependent claims 2 to 15 refer to a system implemented on an application server connected to the Internet and/or any corporate network supporting mobile services which provide mobile users with service-specific information, XML documents, database entries and/or document-based applications that can be accessed via at least one mobile network, the Internet and/or said corporate network. Thereby, said framework performs a context-aware adaptation of said service-specific information and retrieved XML documents, database entries and/or document-based applications to the preferences of said mobile users, the characteristics and capabilities of their mobile devices and/or different application scenarios.

Next, the dependent claim 16 is directed to a method for providing mobile users with service-specific information, XML documents, database entries and/or document-based applications that can be accessed via at least one mobile network, the Internet and/or any corporate network, in which a framework according to anyone of the claims 1 to 15 is applied.

Moreover, the dependent claims 17 and 18 pertain to a multimedia document browser applicant software for displaying XML documents and/or running document-based applications retrieved from an application server connected to the Internet and/or any corporate network on a client terminal, in which a system according to anyone of the claims 1 to 15 and a method for operating a system according to claim 16 are applied.

Finally, the dependent claims 19 and 20 refer to a client-server system of a mobile computing environment consisting of mobile clients and at least one application server, in which at least one client comprises a system according to anyone of the claims 1 to 15, and performs a method according to claim 16 for operating said system.

BRIEF DESCRIPTION OF THE DRAWINGS

Further advantages and possible applications of the underlying invention will become evident from the following description of the preferred embodiment of the invention, which is depicted in the following drawings:

Fig. 1    shows the first part of a scenario, wherein a mobile user demands information from a file and/or application server personalized to his/her user preferences, current situation and his/her mobile device characteristics,

Fig. 2    shows the second part of said scenario, wherein the result of the retrieved personalized information can also be used as an input for another mobile device,

Fig. 3    illustrates an XSLT processing model of an portal used for accomplishing the adaptation of document-based applications to the preferences of mobile users and the capabilities of his/her mobile devices,

Fig. 4    exhibits an UML class diagram showing the generalization relationship of different environmental sensors to the class being inherited from, which are applied to detect, record and/or measure environmental properties serving as input information needed for a personalization process,

Fig. 5    exhibits an UML class diagram showing the composite aggregation of environmental information to a context,

Fig. 6    presents a context document written in Context Description Language (CXDL) comprising application-, device- and user-specific information which includes an element reflecting the "Late Evaluation" mechanism used in CXDL (printed in bold type letters),

Fig. 7     presents a context document written in Context Description Language (CXDL) with a resolved reference after the environmental sensor has been evaluated (printed in bold type letters),

Fig. 8     illustrates the overall adaptation process of the portal,

Fig. 9     depicts different processing steps of the adaptation process needed to obtain personalized information,

Fig. 10    presents the overall structure of a Pipeline Description Language (PDL) document comprising content and style information exchanged between different processing modules (printed in bold type letters),

Fig. 11    shows the information flow through an adapter module used for retrieving necessary information such as context, content and style, and putting it onto a transformation pipeline according to the PDL (= source aggregation),

Fig. 12    shows the information flow through a processing module used for accomplishing the adaptation of document-based applications to the preferences of mobile users and the capabilities of his/her mobile devices,

Fig. 13    shows the information flow through a so-called enrichment processing module which enables an incremental enrichment of content resulting in an adaptation process that can possibly be independent from the current context,

Fig. 14    depicts a PDL document comprising the basic content description before having applied the enrichment processing module (printed in bold type letters),

Fig. 15    depicts a PDL document comprising an enriched content description after having applied the enrichment processing module (printed in bold type letters),

Fig. 16    illustrates a piping example showing the information flow through a transformation pipeline consisting of one adapter module and two processing modules,

Fig. 17    shows the initialization of said processing modules concerning context, content and style,

Fig. 18    depicts an UML package diagram showing a processing module and the dependencies between said processing module and an adaptation unit, a logical unit and XML schemata comprising input and output information, respectively,

Fig. 19    depicts an UML sequence diagram showing the communication between said logical unit (here: a Java Server Page container, JSP) and said adaptation unit (here: an XSLT processor),

Fig. 20    illustrates an example of the JSP part of the processing module, comprising one part for an adaptation of context, one part for an adaptation of content and one part for an adaptation of style (printed in underlined bold type letters),

Fig. 21    shows the result of said adaptation process (printed in bold type letters),

Fig. 22    shows the realization aspect of the JSP part of a reduction processing module,

Fig. 23    illustrates a piping example showing the information flow through a transformation pipeline consisting of one adapter module and two processing modules, in which XML schemata are used as interfaces between said modules,

Fig. 24    depicts an UML sequence diagram showing an overall processing sequence performed by the portal, which gives an overview of the processing steps taking place while processing the request of a user,

Fig. 25    exhibits a diagram showing the strategy of determining the processing descriptor, in which context information is evaluated in a set of Boolean matching rules,

Fig. 26    outlines the processing step realized as an internal piping concept, in which the information flow through a process finder encompassing the resolving of the process descriptor and process description is shown,

Fig. 27    presents an UML sequence diagram showing a processing sequence of the process finder,

Fig. 28    presents an example document showing how a combination of a logical unit (here: a JSP container) and an adaptation unit (here: an XSLT processor) can look like,

Fig. 29    shows an example of a source document which is not adapted to the preferences of mobile users and the capabilities of his/her mobile devices,

Fig. 30    shows an example of a result document which is adapted to the preferences of mobile users and the capabilities of his/her mobile devices,

Fig. 31    depicts an example exhibiting the context (meta) information of a processing module,

Fig. 32    illustrates an example of a CXDL document, in which the server-side system is currently using the application context, the device context and the user context,

Fig. 33    illustrates an example for the description of the resolving pipeline processing descriptor,

Fig. 34    illustrates an example for the description of the resolving pipeline processing construction description,

Fig. 35    presents an example of the communication between a controller and a so-called pipe factory,

Fig. 36    outlines the abstract and rendered state of a document, and

Fig. 37    presents an overview diagram showing how the server-side framework, implemented in a document server, is embedded into a system supporting a problem scenario as depicted in Fig. 1.

DETAILED DESCRIPTION OF THE UNDERLYING INVENTION

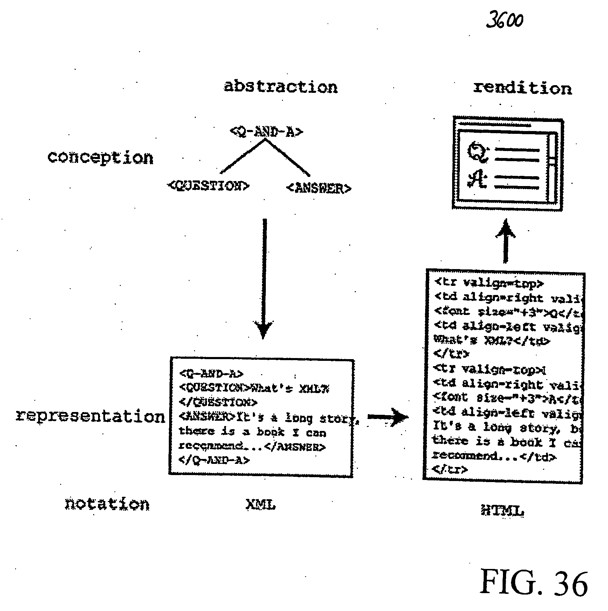

In the following, the preferred embodiment of the underlying invention as depicted in Figs. 1 to 37 shall be explained in detail. The meaning of the symbols designated with reference signs in Figs. 1 to 37 can be taken from Table 3.

Before going into detail, it should be noted that context, as used in the scope of the underlying invention consists of at least

- specific application context like the state of the respective service,

- user preferences expressed by sepcific user requests, e.g. requests demanding a specific video sequence (e.g. documentary film, thriller, etc.),

- mobile device characteristics, and

- the current situation of the user (e.g. time, temperature and/or location).

As depicted in Figs. 1 to 3, personalization 800c relies on context information 102b. It is not the focus of this document 102a how context 102b is aggregated but rather how information can be personalized based on said context information 102b. Therefore, the concept of environmental sensors 401 shall be introduced which support a mechanism for providing context 102b to the portal framework system 3704 according to the underlying invention. Thereby, it should be noted that said framework system 3704 can be applied to multimedia content and any other kind of content.

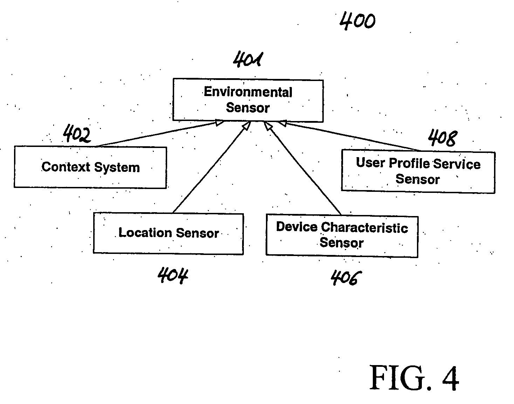

Fig. 4 exhibits an UML class diagram 400 showing the generalization relationship of different environmental sensors 401 to the class being inherited from, which are applied to detect, record and/or measure one or more environmental properties serving as input information needed for the personalization process 800c.

An environmental sensor 401 is an entity that detects, records and/or measures environmental properties serving as input information for a personalization process 800c. It is an abstraction of any input information. As depicted in Fig. 4, an environmental sensor 401 can be a location sensor 404 (e.g. a GPS device 104b), a software entity providing information about the device 104b characteristics of a specific mobile user 104a or a whole context system 402 as defined in the European patent application EP 00 122 560.6.

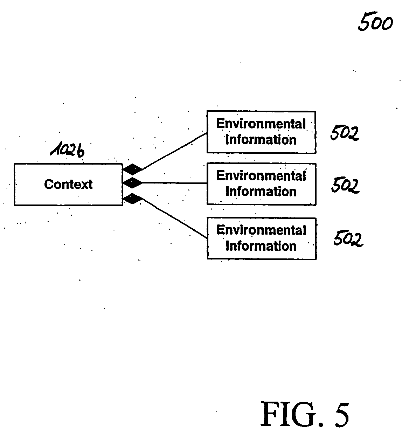

Context 102b as used in the scope of the underlying invention is an aggregation of environmental information 502, which is a presentation of information provided by an environmental sensor 401. Fig. 5 exhibits an UML class diagram 500 showing the composite aggregation of environmental information 502 to a context 102b.

For further processing in the portal system 3704, the context 102b is described in an XML-based language, called CXDL. CXDL is a part of the Pipeline Description Language (PDL) described below. Due to the usage of CXDL as an additional abstraction layer for the description of environmental information between a context provider (an environmental sensor 401) and the context user (a processing module 1200), a complete context system as described in the European patent application EP 00 122 560.6 can be used and integrated into the portal system 3704 according to the underlying invention. Finally, it should be noted that said context information 102b is both readable and writeable. In the scope of the underlying invention, it might be used as an input that can be modified by a processing module 1200. For further information on CXDL, the interested reader is referred to [CXDL].

Each time the context 102b is requested, the environmental information 502 of the environmental sensors 401 are aggregated and mapped into the CXDL. Quite important environmental sensors 401 are the device characteristic sensor and the user profile service sensor, encompassing the user preferences. They are realized based on the usage of CC/PP. Thereby, CC/PP information is saved on the side of the server, and updated and/or synchronized by using information passed along with each request.

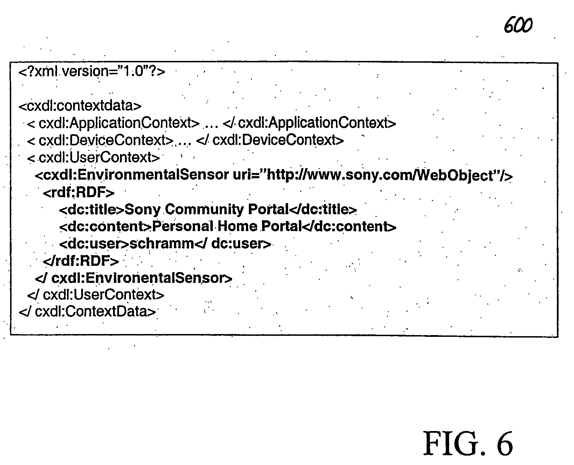

Context 102b as defined above is a composition of environmental information 502. To avoid contacting and retrieving information from environmental sensors 401 which might not be necessary for a specific processing step 900 (decision taken at context 102b creation time), the concept of the "Late Evaluation" mechanism shall be introduced. Fig. 6 depicts an exemplary CXDL document 102a 600 comprising application-, device- and user 104a-specific information. The element EnvironmentalSensor with the attribute "url" specifies the current personal home portal of a user 104a. Further personal preferences, which are currently not part of the context 102b, can be retrieved at processing time (and not at context creation time) - if necessary.

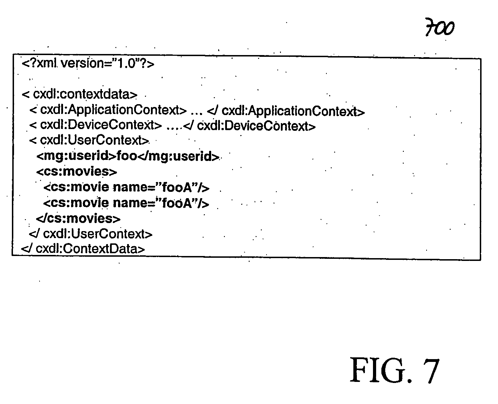

"Late Evaluation" is a general concept used in the Context Description Language (CXDL) and its processing. Detailed information about the environmental sensor 401 is described in RDF as described in [DC] or further CXDL vocabulary. Fig. 7 shows a context document 700 written in CXDL with a resolved reference after the environmental sensor 401 has been evaluated.

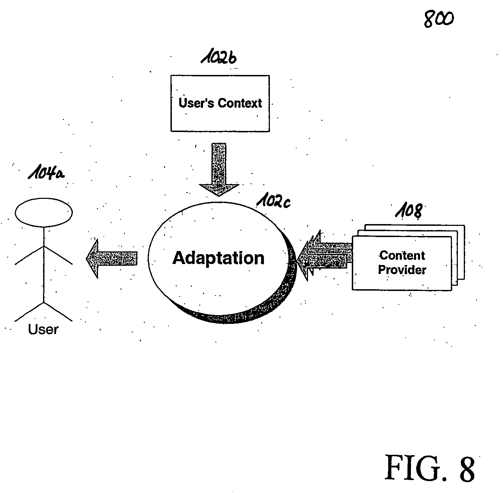

In the following sections, the adaptation process 102c performed by the portal system 3704 according to the underlying invention shall be explained in detail. The overall adaptation process 102c 800 of the portal system 3704 is depicted in Fig. 8. It shows how the gathered context 102b can be applied to the information retrieved from various content providers 108.

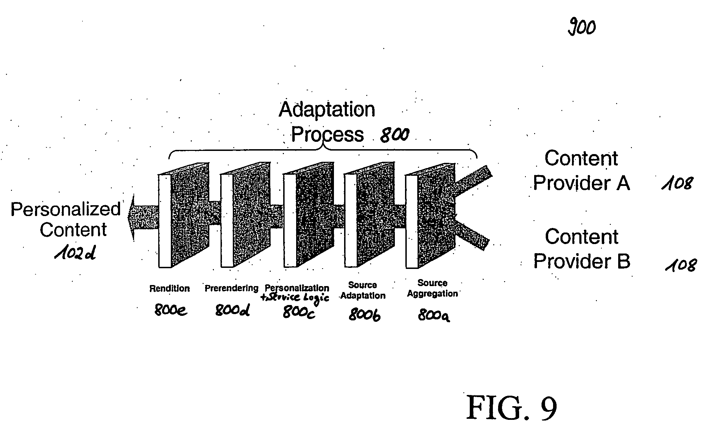

As shown in Fig. 9, the adaptation process 102c can be divided into separate processing steps 900 (tasks). Each task gets as input the information processed by its predecessor. The tasks which are necessary for the adaptation process 102c shall be explained in the following sections:

- Source aggregation 800a: During source aggregation 800a, the contents 102a of different content providers 108, required for a specific service, are aggregated. Dependent on the contracts between the service providers and the content providers 108, which are expressed by XML schemata, information has to be adapted either on the side of the content providers 108, by means of network gateways between said service providers and said content providers 108, or on the side of the service providers. The result of this source aggregation 800a step is that the exchanged information has to be consistent with the contracts between the service providers and content providers 108. Moreover, source aggregation 800a is not limited to content providers 108, in the sense defined in the scope of the underlying invention. Here, rather any kind of input information - either from content providers 108 or information sources available in the XPortal 3704 - is aggregated. Thereby, context 102b as defined above plays a major role as an information source.

- Source adaptation 800b: As shall be explained below, there are different processing modules 1200 which can advantageously be used for the personalization process 800c. They can be applied to the information retrieved and aggregated in the source aggregation 800a step. This information is conforming to the contracts made between said service providers and said content providers 108. Before starting with the personalization 800c, in which a specific vocabulary and document 102a structure is used, the retrieved information has to be adapted if said vocabulary and said document 102a structure do not match with the resulting one from the source aggregation 800a step.

- Personalization 800c: This task is responsible for applying the context 102b of a specific user 104a to the requested information. Despite the fact that the process of personalization 800c is quite service-specific, the XPortal framework 3704 supports the developer of a mobile multimedia service with default processing modules 1200. The usage of said default processing modules 1200 is determined at initialization time.

- Pre-rendering 800d: The pre-renderer 800d transforms the personalized information in an abstract device-neutral mark-up language (DNML). Dependent on how comprehensive or abstract this DNML is, the following DNML usage scenarios can be distinguished:

  a) a DNML scenario using one comprehensive or high abstract DNML for each service, or

  b) a DNML scenario using various service-domain specific DNMLs, in which each DNML is used for a set of domain-specific services, and the degree of abstraction depends on the respective DNML.

It should be noted that the term "abstraction" is introduced in the terminology section as described in [XMLHandbook].

- Rendition 800e: The renderer 800e is responsible for matching information from the DNML to the user agent capabilities of a mobile user's device 104b. Current user agents are able to interpret

  * Hypertext Markup Language (HTML),
  * cHTML (i-mode compatible HTML),
  * Wireless Markup Language (WML), and
  * Synchronized Multimedia Integration Language (SMIL);

  future user agents will be able to support

  * Extensible HTML (XHTML) 1.1,
  * Scalable Vector Graphics (SVGs),
  * WML 2.0 (and their successors), and
  * Extensible Markup Language (XML) documents with their associated Extensible Stylesheet Language Transformations (XSLT) and Cascading Stylesheet (CSS) mechanisms, respectively.

  The rendition 800e process can be accomplished either on the server side or on the client side. This totally depends on the capabilities of a mobile user's device 104b.

The following table summarizes the processing steps and tasks described above:

| Processing step | Task | Usage of Context |
|---|---|---|
| Source Aggregation 800a | Aggregation 500 and adaptation 800 of information according to contracts between service providers and content providers 108. | To some extend, personal preferences are taken into account, e.g. the choice of the preferred home portal of a user 104a (if there is a choice). |
| Source Adaptation 800b | Alignment of the vocabulary and document structure 102a with the vocabulary and document structure 102b of a specific service. | No specific example. |
| Personalization 800c | Application of context information 102b to information requested by a user 104a with the aid of various processing modules 1200. | Thereby, requested service-specific information is personalized based on the context, especially the user preferences, mobile device capabilities and the user's current situation, e.g. time, location and/or temperature. |

(continued)

| Processing step | Task | Usage of Context |
|---|---|---|
| Pre-rendering 800d | Transformation of personalized information into a device-neutral language in order to facilitate the usage of different rendition modules 800e. | A scenario in which context information 102b might be useful is the selection of a specific DNML, if more than one DNML is supported. |
| Rendition 800e | Transformation of information described in a DNML into a presentation language supported by the mobile device 104b of the respective user 104a. | Rendition decisions 800e are made dependent on the context 102b of the respective user 104a (e.g. with regard to color, display ssize, etc.). |

As explained above, the adaptation process 102c is split up into different separate subordinate tasks. To accomplish these subordinate tasks, processing modules 1200 and adapter modules 1100 are employed. A specific subordinate task can be realized by the usage of a number of processing modules 1200. The core functionality of a processing module 1200 is the transformation of input information (e.g. context 102b, content and style 102a) into respective output information controlled by the logical unit 1200a of each processing module 1200.

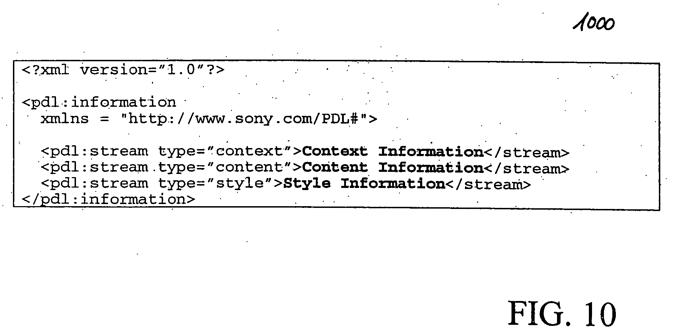

Processing modules 1200 reflect filter units according to the pipe-and-filter pattern as described in [PipeFilters]. In this context, information between said processing modules 1200 is exchanged via XML. Therefore, the Pipeline Description Language (PDL) is introduced. Fig. 10 depicts the overall structure of a PDL document 1000 exchanged between different processing modules 1200 comprising content and style information 102a exchanged between different processing modules 1200 (printed in bold type letters). Herein, the root element "information" contains elements named "stream". The stream element contains the specific information like context 102b, content or style 102a. Arbitrary streams can simply be added by introducing a new attribute value for the attribute "type". The processing modules 1200 are needed for the processing of each stream. XML schemata can be used for a more detailed description of a contract between processing modules 1200. These contracts are an extension to the Personalized Information Description Language (PIDL) and used for specific processing module usage scenarios.

In the following, the realization of said adapter modules 1100 and said processing modules 1200 shall be explained in detail.

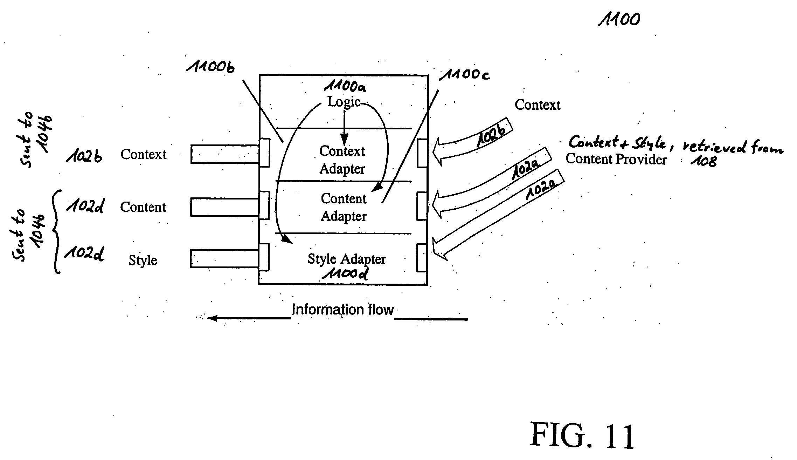

- An adapter module 1100 as depicted in Fig. 11 is applied at the beginning of the transformation pipeline 2410. It is used for the source aggregation 800a step to retrieve necessary information such as context 102b, content and style 102a, and putting it onto the transformation pipeline 2410 according to the PDL. It should be noted that (as explained above) the resource can be any entity addressed by a Universal Resource Identifier (URI), databases and any kind of application. An important resource used in the XPortal 3704 is the input of the context 102b, which is either simply aggregated or offered by a supporting context system 402. The XPortal framework 3704 according to the underlying invention supports developers with a set of default adapter modules 1100 realized as a combination of JSP containers and XSLT processors. As will be shown in the following sections, adapter modules 1100 are quite similar to processing modules 1200 from a realization point of view.

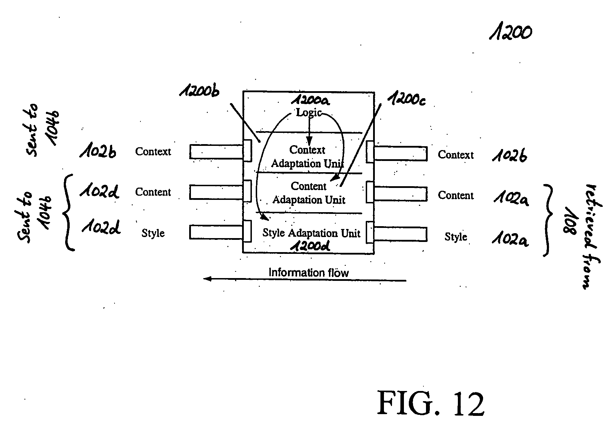

- Each processing module 1200 as depicted in Fig. 12 contains a set of adaptation units 1200b/c/d for context 102b, content and style 102a, and one logical unit 1200a which controls said adaptation units 1200b/c/d. The task of said logical unit 1200a is to analyze the input information, and to initialize the adaptation units 1200b/c/d. After that, the input (context 102b, content, and style 102a) is transformed according to the specific adaptation units 1200b/c/d. In this context, it has to be distinguished between general processing modules 1200 and specific ones. General processing modules 1200 can be initialized by a specific value and/or expression and used straight since they have a specific default behaviour and are available as one part of the XPortal framework 3704. By contrast, specific processing modules 1200 involve that said logical units 1200a and adaptation units 1200b/c/d have to be realized for a specific service or set of services. For this purpose, they have to be implemented for a specific service or set of services. It should be noted that in case a processing module is used at any position, it can not be the first one, because for getting information from a content provider an aggregation module has to be used. This means that "at any position" reflects any position without the first one.

In the following, seven general processing modules 1300a-g shall briefly be introduced:

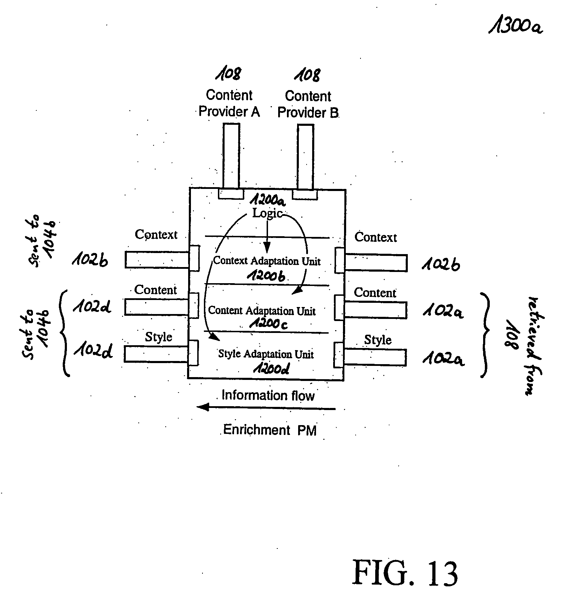

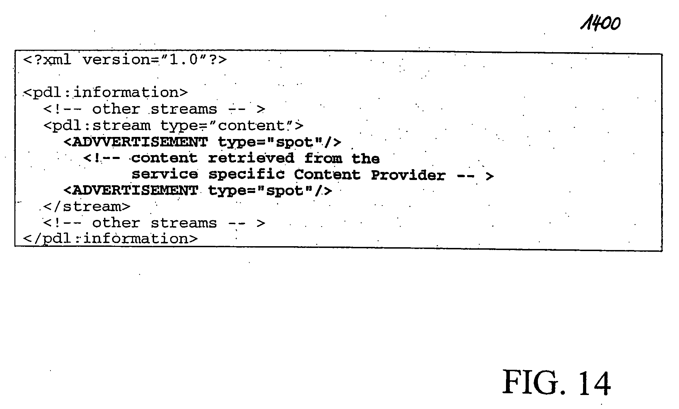

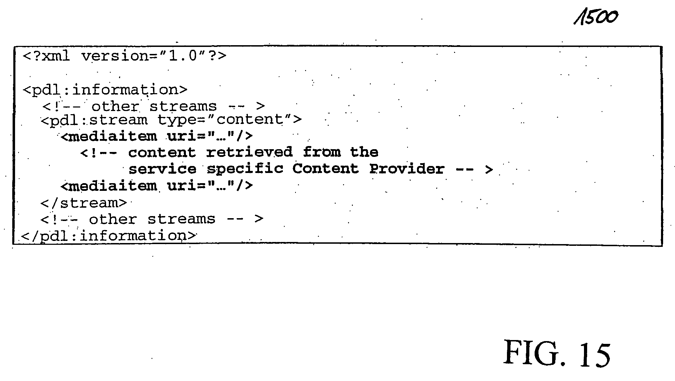

- Enrichment processing modules 1300a as depicted in Fig. 13 are used at any position within the transformation pipeline 2410. They enable an incremental enrichment of content 102a resulting in an adaptation process 102c that can be independent from the current context 102b. The semantics of an enrichment processing module 1300a is either passed as parameters during the initialization process or a fix part of the logical unit 1200a. Fig. 14 depicts a PDL document 1400 comprising the basic content description 102a before having applied an enrichment processing module 1300a (printed in bold type letters). During the adaptation process 102c, the basic (quite abstract) content description 102a can be enriched, based on the current context 102b and the logical unit 1200a of the processing module 1200, which results in any kind of content 102d. How the result might look like is depicted in Fig. 15, which shows a PDL document 1500 comprising an enriched content description 102d after having applied said enrichment processing module 1300a (printed in bold type letters).

- Selective enrichment processing modules 1300b are used at any position within the transformation pipeline 2410. They can currently be used to enrich the information being on the transformation pipeline 2410. Furthermore, they are able to switch between different content providers 108 depending on context 102b or content 102a.

- Extractive enrichment processing modules 1300c are used at any position within the transformation pipeline 2410. They can currently be used to enrich the information being on the transformation pipeline 2410. Besides, they have the ability to extract information from the requested content 102a at the time of a user request.

- Selective non-extractive enrichment processing modules 1300d combine features of enrichment processing modules 1300a and selective enrichment processing modules 1300b.

- Non-selective extractive enrichment processing modules 1300e are not able to switch between different content providers 108. However, they have the ability to extract information from the requested content 102a.

- Reductive processing modules 1300f can be used for reducing parts of the input information. They have to be initialized by a value and/or expression determining which part of said input information has to be reduced. It can be distinguished between exact reductive processing modules 1300f, which only reduce exact matching elements, and comprehensive reductive processing modules 1300f, which reduce matching elements with their associated children.

- Restructive processing modules 1300g can be used for a restructuralization of said input information. They have to be initialized by a value and/or expression which determines what kind of restructuralization has to be performed (e.g. a rearrangement of the linear and non-linear structure of content 102a), and how this restructuralization has to be performed.

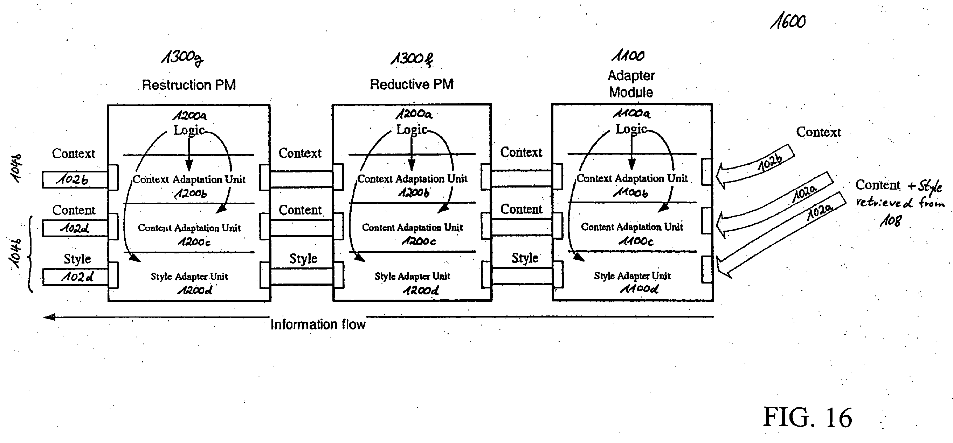

Fig. 16 depicts a piping example 1600 showing how a transformation pipeline 2410 consisting of one adapter module 1100 and two different processing modules 1200 can look like, and the information flow between them. It should be noted that said information is passed as an XML document 102a described in PDL.

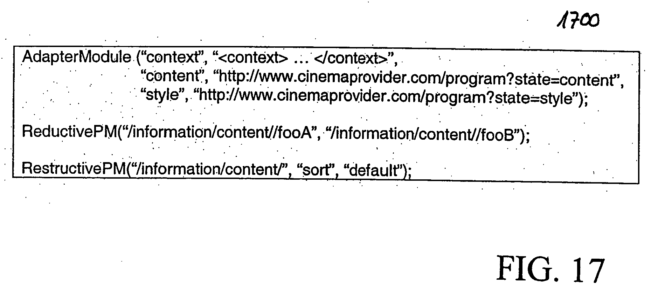

Fig. 17 shows an initialization 1700 of said processing modules 1200 concerning context 102b, content and style 102a. Thereby, pseudo code is used. The adapter module 1100 is initialized by context 102b passed as a plain XML document 102a consistent with the CXDL, content 102a specified by a uniform Resource Locator (URL), and/or style specified by an URL.

The following processing modules 1200 are triggered with specific parameters used for said reductive processing modules 1300f and restructive processing modules 1300g, respectively.

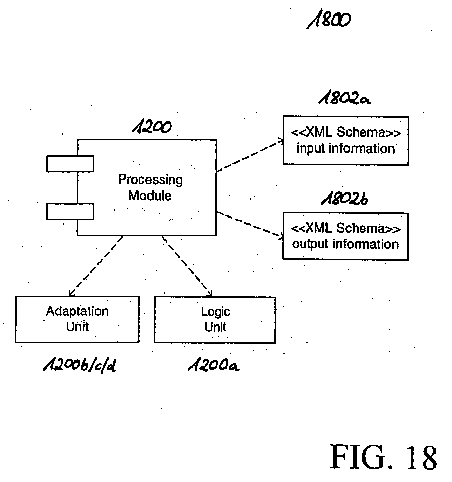

Fig. 18 depicts an UML package diagram 1800 showing a processing module 1200 and the dependencies between said processing module 1200 and an adaptation unit 1200b/c/d, a logical unit 1200a and input/output information described by XML schemata 1802a/b, respectively. A processing module 1200 is realized by a Java Server Page (JSP) with a modified JSP container.

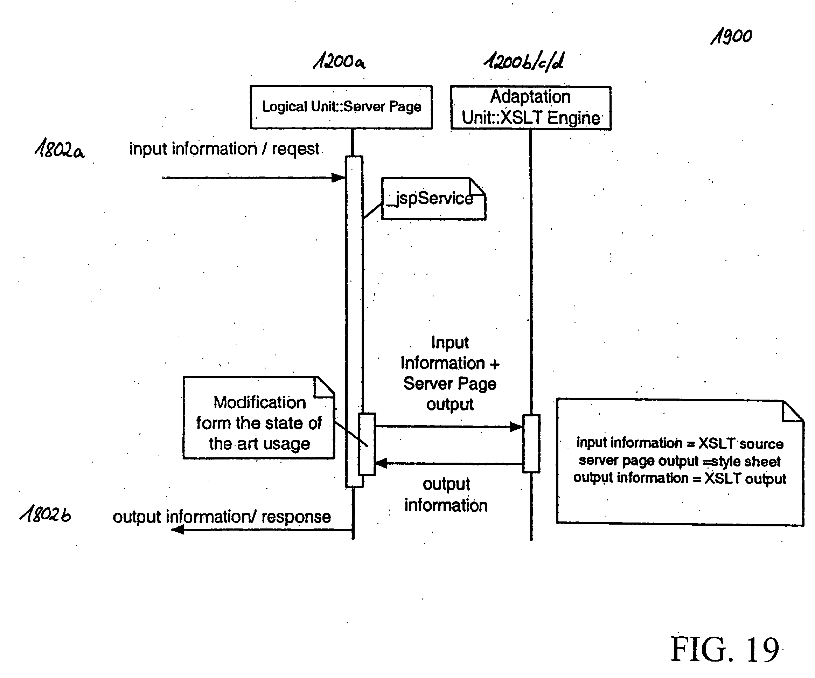

Fig. 19 depicts an UML sequence diagram 1900 showing how said logical unit 1200a (a JSP container) works together with an adaptation unit 1200b/c/d (an XSLT processor), which is one part of the modified JSP container. Before the generated server page output is sent back, it is passed to the XSLT processor along with the input information of the JSP container. The result of the XSLT processor is then passed back as an output information.

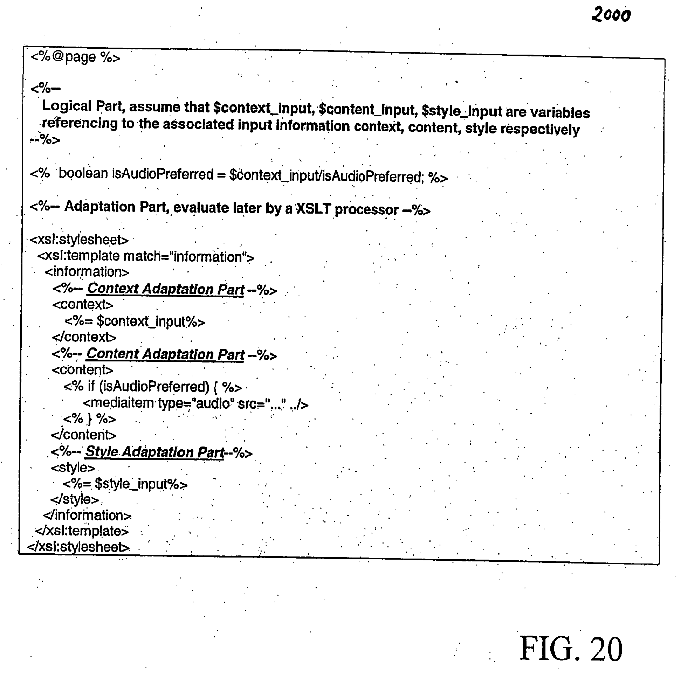

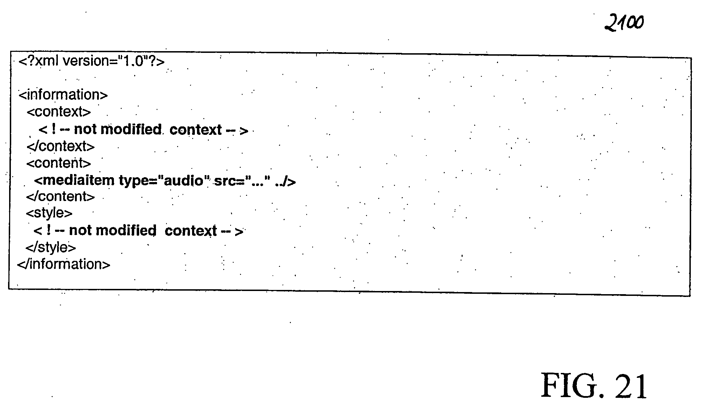

Fig. 20 illustrates how a processing module 1200 looks like. It shows an example of the JSP part 2000 of the processing module 1200, comprising one part for an adaptation 102c of context 102b, one part for an adaptation 102c of content 102a and one part for an adaptation 102c of style (printed in underlined bold type letters). The logical part is at the top of the JSP page, and the various adaptation units 1200b/c/d are parts of the generated transformation sheet. In this example, the content 102a is enhanced depending on the context variable "isAudioPreferred". The context and style adaptation parts 102c are then passed through the processing module 1200 without any modification. After that, the content adaptation 102c part evaluates the variable "isAudioPreferred", and - based on its value - an element of the type "mediaitem" is inserted into the resulting content 102d or not. How the result 2100 of that adaptation process 102c looks like is depicted in Fig. 21.

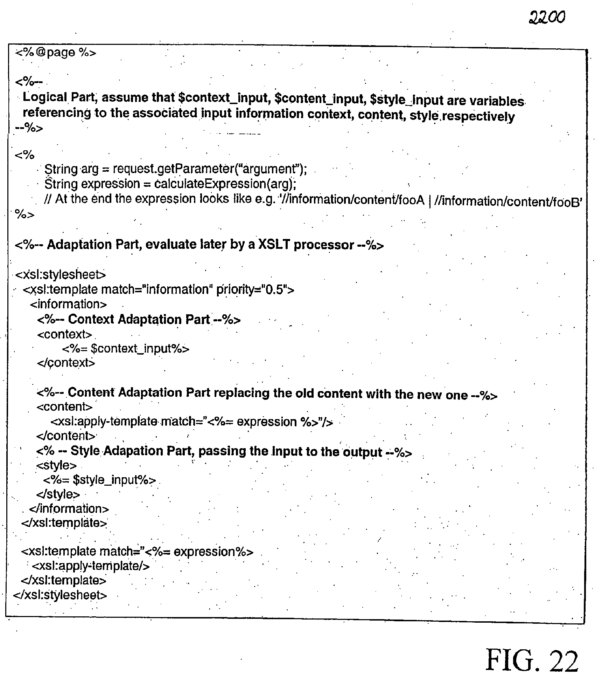

Fig. 22 shows the realization aspect of the JSP part 2200 of a reductive processing module 1300f, which is one part of the XPortal framework 3704 according to the underlying invention. The reductive processing module 1300f is called with an appropriate XPath expression which is used as an argument for matching the attribute of the "xsl: template" element. It only removes the element, not their children (designated as "exact reduction").

Thereby, XPath and XQuery are used as languages for describing values and/or expressions to be used as arguments for the initialization of general or specific processing modules 1200. It should be noted that presently both languages tend to be merged. Therefore, it can be assumed that in the future only one comprehensive language will survive.

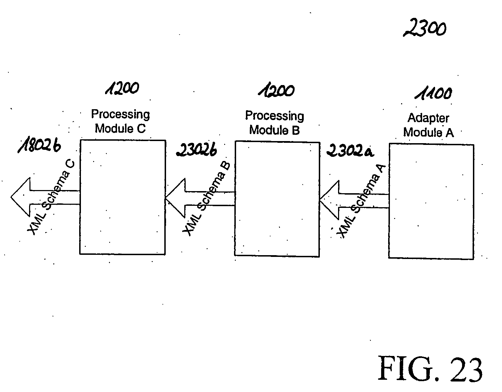

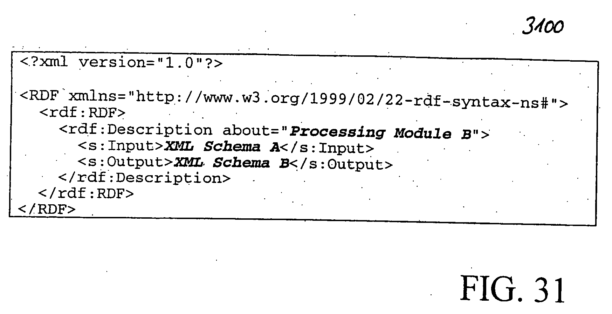

Fig. 23 depicts an example 2300 which shows how a transformation pipeline 2410, consisting of two different processing modules 1200 and one adapter module 1100, can look like. Thereby, the interfaces of a first processing module 1200 designated as B are the XML schemata 23704a+b, and the interfaces of a second processing module 1200 designated with C are the XML schemata 23704b and 1802b. Each processing module 1200 is associated with an additional RDF file reflecting information about the respective transformation step. Therefore, RDF is used. In Fig. 31, an example exhibiting the context (meta) information 3100 of a processing module 1200 is depicted.

Processing modules 1200 are realized as a combination of JavaServer Pages (JSP) as described in [Java Servlets] and XSLT processors. Each processing module 1200 can modify the input information, and transform it into output information. General processing modules 1200 are supported and have to be initialized by a specific value, an XPath, XQuery or any other regular expression.

In the following, the main features of the XPortal framework 3704 according to the underlying invention shall be described in detail.

The XPortal is a framework 3704 supporting an easy development, deployment and maintenance of mobile services, particularly mobile multimedia services. Developers can realize their mobile (multimedia) services by using general or specific processing modules 1200 and their appropriate adapter modules 1100 as described above.

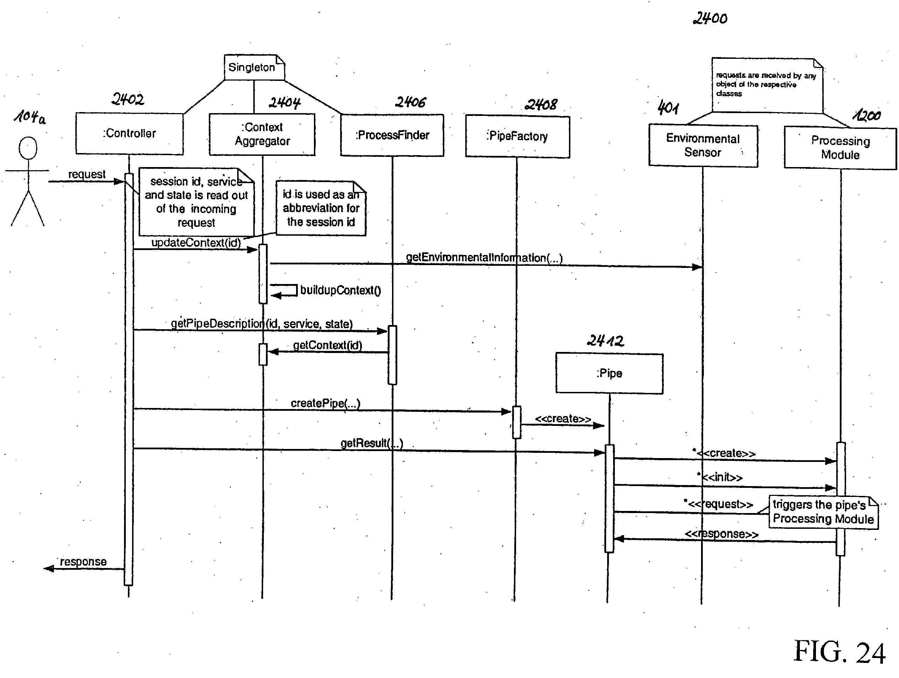

Fig. 24 depicts an UML sequence diagram 2400 showing an overall processing sequence performed by the XPortal 3704 according to the underlying invention, which gives an overview of the processing steps 900 taking place while processing the request of a user 104a. Thereby, the XPortal 3704 supports one controller 2402 component (singleton pattern) which is responsible for processing incoming requests. Each incoming request results in a number of activities, which can be summarized as follows:

- Update of the current context 102b by a so-called context aggregator 2404: This means that the context 102b retrieved from a set of environmental sensors 401 is updated. As shown in [DiplThesis], the CXDL contains at least:

  • user context, encompassing the properties of a specific user 104a, e.g. the identity number and preferences of said user 104a,

  • device context, encompassing the device characteristics 104b of a specific mobile user 104a,

  • application context, encompassing the requested service, state and session identity number, and

  • current situation, encompassing time, temperature and/or location.

- Resolution of the pipeline processing construction description by a so-called process finder 2406: Based on the current context 102b of a user request, a pipeline processing construction description is resolved. It consists of a characterization of used processing modules 1200 and their appropriate initialization parameters.

- Creation, initialization and set-up of the transformation pipeline 2410 by a so-called pipe factory 2408: This is done based on the pipeline processing construction description. Thereby, a pipeline component 2412 simply calls the specific processing modules 1200, initializes and manages the information flow between them.

In the following, a number of components of the XPortal framework 3704 shall be described which are needed to build up the current context 102b. These components include a controller 2402, a context aggregator 2404, a process finder 2406 and a pipe factory 2408.

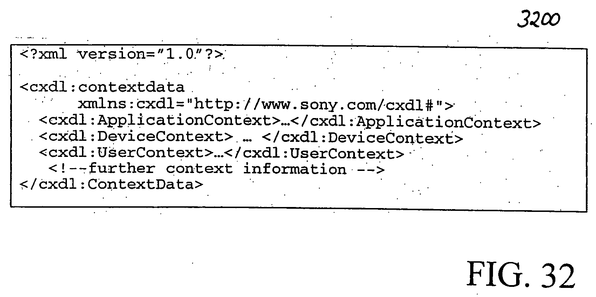

The context aggregator 2404 is responsible for managing context information 102b. It is triggered by the controller 2402 for each incoming request, which means that the actual information of all environmental sensors 401 is aggregated, and their vocabulary is transformed into CXDL vocabulary. To gain an insight into CXDL documents, an example of a CXDL document 102a 3200 is outlined in Fig. 32. Thereby, the XPortal 3704 is currently using the application context, the device context, the user context and his/her current situation (e.g. time, temperature and/or location). Additionally, any further context information 102b can also be integrated.

Resolving the description of a transformation pipeline 2410 is a two-stage process. First, a pipeline processing descriptor 2504 is determined, and second, based on that descriptor, a pipeline processing construction description is determined. This task is performed by the process finder 2406.

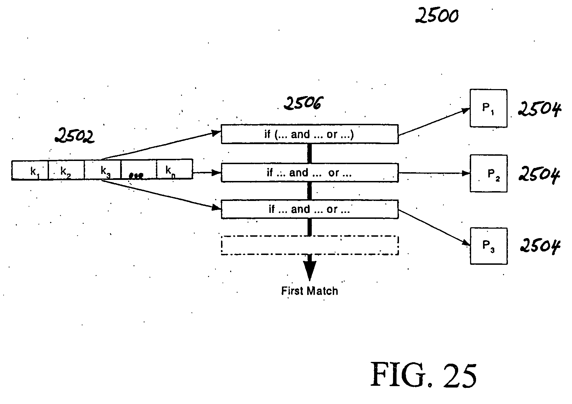

The strategy 2500 of determining the pipeline processing descriptor 2504 is depicted in Fig. 25. Thereby, context information 102b, here designated by a context variable 2502 ($k_i$), is evaluated by a set of Boolean matching rules 2506 ($R_i$) which are applied to a combination ($c_i$) of current context 2502 ($k_i$) resulting in a specific pipeline processing descriptor 2504 ($P_i$):

$$R_i: c_i(k_j) \mapsto P_i \ \forall \ i,j \in \{1,2,3,...,n\}$$

with

$$c_i: \{false, true\}^n \rightarrow \{false, true\} \text{ for } n \in \mathbb{N}.$$

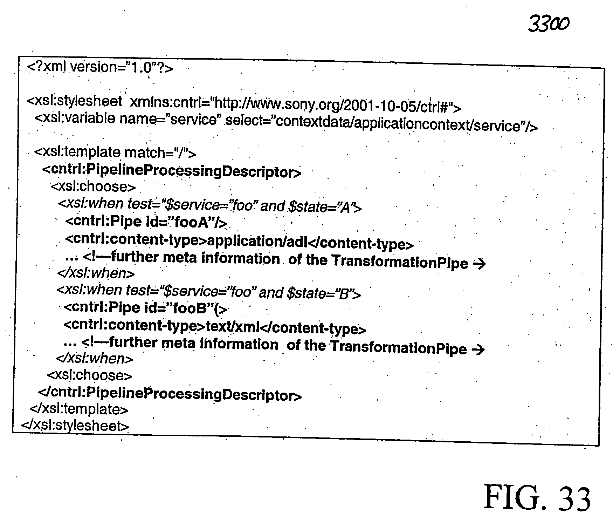

Fig. 33 illustrates for the description 3300 of the pipeline processing descriptor 2504 is managed (printed in bold type letters). It contains information for resolving the pipeline component 2412 (pipe identifier), meta information of the transformation pipeline 2410 (e.g. used for determining the response), and properties like content type specifying the kind of content 102d returned to a specific client.

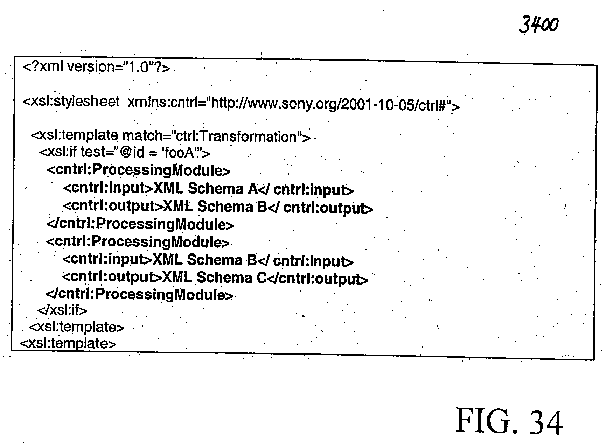

As depicted in Fig. 34, the pipeline processing construction description is resolved by applying the descriptor to the pipeline description resource 2602. Thereby, the matching attribute is specified by the attribute "id", which denotes the identity number of a specific user. The processing construction description consists of a sequence of processing module 1200 descriptions. Thereby, each processing module 1200 is not directly specified but by its specific input/output scheme. The executing pipeline component 2412 is responsible for finding appropriate processing modules 1200 realizing the adaptation 102c from a specified input to a specified output.

After having determined the processing construction description, said description is passed to the pipeline component 2412, which is responsible for triggering the processing pipeline 2410 and executing an adaptation 102c based on the passed description.

Thereby, the vocabulary and the document 102a structure of the pipeline processing descriptor 2504 and the pipeline processing construction descriptions are taken from the Service Control Description Language (SCDL).

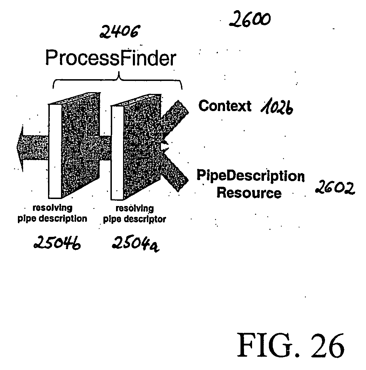

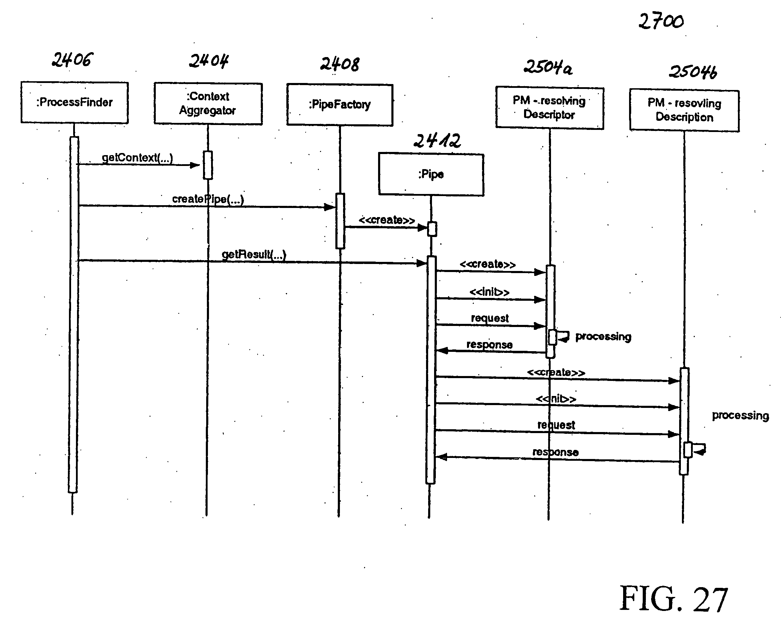

For the process of determining the pipeline processing description - encompassing the resolving of the pipeline processing descriptor 2504 and the pipeline processing construction description - an internal piping concept is employed. Both for determining the pipeline processing descriptor 2504 and the pipeline processing construction description specific Processing modules 1200 are used. Fig. 26 presents a diagram 2600 showing the underlying processing step 900 realized as an internal piping concept, in which the information flow through a process finder 2406 encompassing the resolving of the pipeline processing descriptor 2504 and pipeline processing construction description is shown. Thereby, the context 102b of a specific user 104a and the pipeline description resource 2602 serve as input of the transformation pipeline 2410. The specific processing modules 1200 are part of the XPortal framework 3704. This means that the developer of a new service only has to modify the specific pipeline description resource 2602 which is realized as XSLT stylesheet files. Fig. 27 exhibits an UML sequence diagram 2700 showing a processing sequence of the process finder 2406.

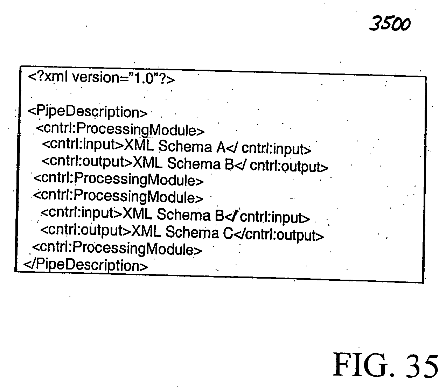

After having received the pipeline processing construction description, the controller 2402 requests a pipeline component 2412 at the pipe factory 2408. The processing construction description is passed to the pipeline component 2412, which is responsible for resolving processing modules 1200 based on said description. Furthermore, said pipeline component 2412 is responsible for initializing said processing modules 1200, and passing information between them. Fig. 35 shows an example 3500 of the communication between said controller 2402 and the pipe factory 2408. The pipeline component 2412 passes the adapted content 102d back to the controller 2402, which itself passes it back in response to the user agent of a mobile user 104a.

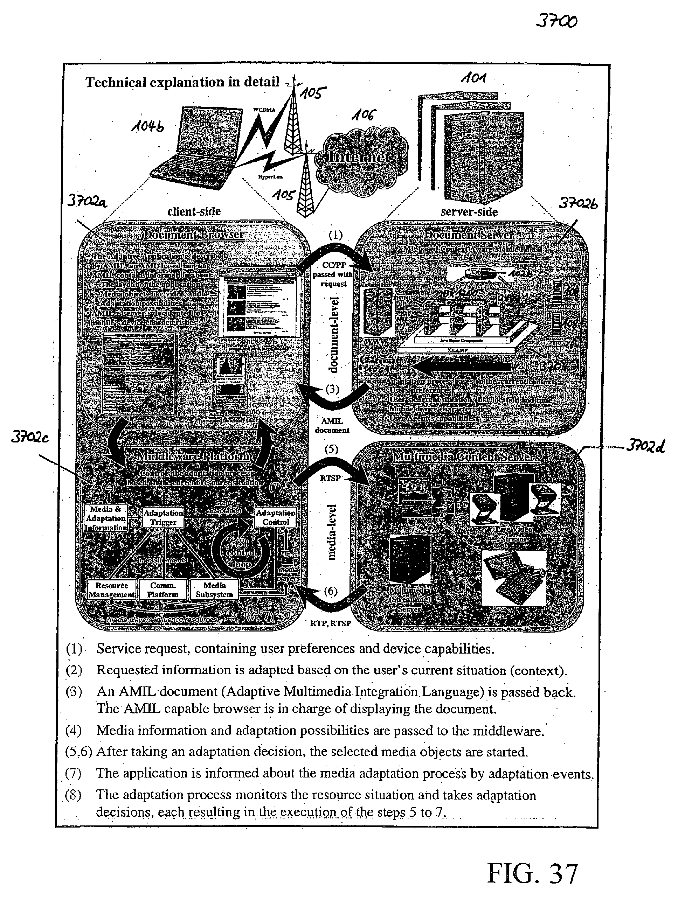

To get a better understanding of the field of the invention, Fig. 37 presents an overview diagram 3700 showing how the server-side framework 3704 according to an embodiment of the underlying invention, implemented in a document server 3702b, is embedded into the overall communication system supporting a problem scenario 100 as depicted in Fig. 1. In this context, it should be distinguished between adaptation accomplished on document level and adaptation accomplished on media level. As can be taken from Fig. 37, the focus of the underlying invention is on the document level.

It should be mentioned that for the request of each client terminal 104b context information 102b is prepared, updated and synchronized. Based on said context, specific processing modules 1200 and aggregation modules 2404 are selected and connected to a processing pipeline 2410. Each processing module 1200 and aggregation module 2404 used on said processing pipeline 2410 has full access (readable and writeable) for the information passed through. This means that each processing module 1200 and aggregation module 2404 is able to adapt information (e.g. context 102b, content and/or style 102d) based on the current input - context 102b, content and/or style 102a. Furthermore, the overall adaptation is entirely described by the usage of XML/XSLT regarding the source aggregation process 800a, the source adaptation process 800b, the personalization process and service logic 800c, the pre-rendering process 800d, and the rendition process 800e.

Each time the document browser 3702a of a client terminal 104b sends a service request containing user preferences and device capabilities to the document server 3702b (step #1), the requested information is adapted based on the user's current situation (step #2), which means based on his/her context 102b. After that, an Adaptive Multimedia Integration Language (AMIL) document is passed back to the document browser 3702a of said client terminal 104b (step #3), which shall be assumed to be capable of handling AMIL documents, in order to be displayed. Then, the retrieved media information are passed on to the middleware platform 3702c along with the adaptation possibilities (step #4). After having taken an adaptation decision (step #5), the selected media objects are started (step #6). Next, the respective application is informed about the media adaptation process by adaptation events (step #7). Said adaptation process monitors the resource situation and takes adaptation decisions (step #8), each resulting in the execution of the steps 5 to 7.

In the following sections, the key characteristics of two different systems according to the state of the art - Apache Cocoon and ORACLE Application Server Wireless - and their main differences to the XPortal framework 3704 according to the underlying invention shall be investigated:

Cocoon is a Java-based publishing framework that can be used for evaluating W3C technologies like XML, XSLT and others to provide Web content. Its main features can be summarized as follows:

- As distinct from the underlying invention, the transformation engine is not based on a pipe-and-filter pattern, but on a reactor pattern: With regard to the reactor pattern, each XSLT stylesheet determines its successor itself. Unlike the controller 2402 of the claimed XPortal framework 3704 according to the underlying invention, the knowledge about these transformation chains is not centralized.

- Apache Cocoon also supports the concept of source adaptation 800b, available as a separate processor in Cocoon.

- To some extend, the Cocoon framework supports device capabilities passed as HTTP header elements. In contrast to the claimed XPortal framework 3704 according to the underlying invention, these elements do not comprise context 102b in a general form. Moreover, the XPortal framework 3704 understands context 102b as an aggregation of different environmental sensors 401, e.g. location and other information built by means of the CC/PP framework - a concept which is not considered or mentioned anywhere in Cocoon.

- The transformation pipeline 2410 as described in PDL can be realized in Cocoon. However, it is not part of the Cocoon framework and not mentioned anywhere - unlike the claimed XPortal framework 3704.

For further details on Apache Cocoon, the interested reader is referred to [Cocoon].

ORACLE Application Server (OAS) Wireless is a portal service which delivers information and applications to mobile devices 104b.

- OAS is an extension of the existing ORACLE application server. Thereby, the focus lies on making existing Web applications mobile.

- OAS Wireless provides renderers 800e with WML 1.1, Tiny HTML, VOXML, HDML and plain text.

- Besides, OAS explicitly provides source adaptation layers 800b and pre-rendering layers 800d.

- Source Adapters 800b are available for SQL databases, Java Servlets or in common Web resources specified by URLs.

- Personalization 800c is supported to some extent. A user 104a can tailor the presentation of specific services based on his/her requirements. However, personalization 800c is not applied to the logical part of the service itself - as done in the XPortal framework 3704 according to the underlying invention.

- Additionally, a support for location-based services (LBS) is provided. Thereby, a geo-coding technology provides a user 104a with coordinates such as longitude or latitude from a given address.

For further details on OAS Wireless, the interested reader is referred to [ORACLE]. With regard to said LBS support, it should be noted that the origin of said location information is not mentioned in [ORACLE].

In the following, the main advantages of the XPortal framework 3704 according to the underlying invention shall briefly be described.

The described XPortal framework 3704 is unique in its overall functionality. It provides a basic framework 3704 for the development of personalized mobile services. As explained in the previous sections, related products have the focus on the rendition 800e and source aggregation 800a part and not on the personalization 800c part.

The XPortal framework 3704 supports developers with a set of processing modules 1200 and a pipeline component 2412. Based on the concept of the transformation pipeline 2410 and its PDL, each processing module 1200 has the full control of the context 102b, content and style information 102a. This means that each information stream 102a+b can be modified dependent on the content 102a of other information streams 102a+b. In a more realistic scenario, content and style 102a can be modified dependent on the context 102b. The context 102b can be modified too, which results in modifying subsequent adaptation steps 102c.

Furthermore, the XPortal framework 3704 is fully context-aware, which means that the context 102b is available at each processing step 900, in each processing module 1200 and processing adapter, and not simply at the rendition 800e step like other currently available products. Thereby, the processing adapter has the current context information 102b available, and can be connected to the respective content provider 108 dependent on said context information 102b.

In particular, the adaptation 102c of style dependent on the adaptation 102c of content 102a will become more and more important. As an example, Cascading Stylesheets (CSS3) should be mentioned, which describe the rendering of XML element type names. If the vocabulary changes during an adaptation 102c, the associated stylesheet has to be adapted too. This is also valid for the usage of the Extensible Stylesheet Language (XSL). For further information on CSS3 and XSL, the interested reader is referred to [CSS3] and [XSL].

Moreover, the XPortal framework 3704 controller 2402 is service-independent. All functionality is realized in the Service Control Description Language (SCDL). For realization issues, the vocabulary has been intermixed with the XSLT vocabulary.

The exact pipeline processing description is resolved dynamically - based on the current context 102b - before the first processing module 1200 and/or processing adapter is triggered. This is the basis for further pipeline processing analysis and optimization possibilities.

Finally, said XPortal framework 3704 can easily be integrated into every other known portal framework 3704. An adapter module 1100 reads any kind of information and the output content 102d of the last used processing module 1200 (before the information is sent back to the client). This information does not need to be a valid XML document.

In conclusion, the main advantages of the XPortal framework 3704 according to the underlying invention shall briefly be described from a personalization 800c, scalability and extensibility point of view.

Personalization 800c of a service is a very specific task. It has to be integrated in the overall service design decision. The claimed XPortal framework 3704 supports developers with processing modules 1200, a default adapter module 1100 and the piping concept.

Due the fact that the processing modules 1200 are realized as JSP pages running in an extended JSP container, they can be stored anywhere in a corporate network, thereby having the possibility of load balancing.

A major benefit of the XPortal 3704 is that all the processed information is described in XML, combined with XML schemata 1802a+b. For example, it is quite easy to add a new information stream 102a+b to the Pipeline Description Processing Language (PDPL).

Table 1:

| Terminology | |
|---|---|
| Term | Meaning |
| Origin Server | The server on which a given resource resides or is to be created - see RFC (1945). |
| XML Application | Designates an used vocabulary and document structure, described in a DTD or Scheme. |
| XML Vocabulary | Encompasses the used element type names in an XML application. |

Table 1: (continued)

| Terminology | |
| --- | --- |
| Term | Meaning |
| Abstract versus Rendition | See Fig. 36: The left column shows the document 102a in its abstract state, while the right column shows its rendered state. The left document 102a is in state abstraction, the right one in state rendition 800e [XML Handbook]. |
| Rendition Process | The process of transforming a document from the abstract state into the rendition state [XMLHandbook]. |
| Term "Abstract" | Usage of the term "abstract":<br><emphasize><br>this should be done </emphasize> <font type="bold"><br>this should be done </font><br>It is said that an XML element is more abstract than the other one if the element<br>type name logically expresses a more abstract entity than the other one. As depicted in the two rows above, the first XML element (in the first row) is more abstract than the other one (in the second row). |
| Singleton-Pattern | See [SINGLETON]. |
| Information Provider | An entity that collects information and makes it available to Internet users. Note: The information can be provided directly to users, or provided via an Internet access provider or a content provider [TechGlossary].<br>In the context of the underlying invention the information provider is used as a provider for the content provider 108. |
| Content Provider | An organization that creates and maintains databases containing information from an information provider. Note: The content provider and the information provider may be that same organization.<br>[TechGlossary] In the context of the underlying invention every kind of resource like XML files, databases and context 102b retrieved from a database or context system 402 is considered as a content provider 108. |
| Service Provider | An organization that provides services for content providers [TechGlossary].<br>In the context of the underlying invention, the adaptation process is a part of the service provider's service. It might be that the rendition part 800e would be a part of the mobile client's user agent capabilities or intermediate network entities. However, this case shall not be considered here. |
| Contract between Service Providers and Content Providers | A contract between the service provider and any content provider defines the way that information is exchanged between the participating partners. In the context of this technical report a contract is described in XML. Often the term "Web Service Agreement" is used as a synonym. |

Table 1:   (continued)

| Terminology | |
| --- | --- |
| Term | Meaning |
| JSP Container | Software component executing JavaServer Pages (JSP). Encompasses the management of generating servlets out of a Java Server Page. |
| Framework | A set of correlates software units, embodying an abstract design for solutions to a number of related problems. |
| Document Adaptation | An adaptation describes rules for transforming a source document into a result document. |

Table 2:

| References | |
| --- | --- |
| Abbr. | Publication |
| [CC/PP] | "Composite Capability / Preference Profiles (CC/PP): Structure and Vocabularies", W3C Working Draft, 15 March 2001. http://www.w3.org/TR/2001/WD-CCPP-struct-vocab-20010315/ |
| [Cocoon] | Apache Software Foundation: "Cocoon", March 2001. http://xml.apache.org/cocoon/index.html |
| [COMCAR] | "Communication and Mobility by Cellular Advanced Radio". http://www.comcar.de/ |
| [CSS3] | Cascading Stylesheets. http://www.w3.org/Style/CSS/current-work/ |
| [DC] | "Dublin Core Metadata Initiative", Dublin Core Qualifiers, DCMI Recommendation. http://dublincore.org/documents/2000/07/11/ dcmes-qualifiers/ |
| [DiplThesis], [CXDL] | Jörg Treiner, "The XPortal", diploma thesis, Faculty of Communications Engineering, University of Applied Science, Nürnberg, Germany 2001. |
| [DSSSL] | ISO/IEC 10179:1996, "Document Style Semantics and Specification Language (DSSSL)". http://www.jclark.com/dsssl/ |
| [HTTPex] | H. Frystyk Nielsen, P. Leach, Scott Lawrence: "HTTP Extension Framework". http://www.w3.org/Protocols/HTTP/ietf-http-ext/draft-frystyk-http-extensions-03 |
| [Java Servlets] | Java Servlet Technology http://java.sun.com/products/servlet/ |
| [JavaServer Pages] | Java Server Page Technology http://java.sun.com/products/jsp/ |
| [MVC], [SINGLETON] | - Erich Gamma, Richard Helm, Ralph Johnson, John Vlissides: "Model View Controller Pattern", - "Design Patters", Addison-Wesley Professional Computing Series. |
| [ORACLE] | ORACLE Corporation: "ORACLE 9i Wireless Documentation". http://otn.oracle.com/docs/products/iaswe/ content.html, May 2001. |
| [PipeFilters] | - Frank Buschmann, Regine Meunier, Hans Rohnert, Peter Sommerlad, Michael Stal: "Pipe and Filter Patterns", - "A System of Patterns", John Wiley & Sons. |
| [SOAP] | "SOAP Version 1.2", W3C Working Draft, 9 July 2001. This version: http://www.w3.org/TR/2001/ WD-soap12-20010709/ |

Table 2: (continued)

| References | |
|---|---|
| Abbr. | Publication |
| [TechGlossary] | "American National Standard for Telecommunications", Telecom Glossary, 2000. http://www.its.bldrdoc.gov/projects/ tlglossary2000/tlg2k.html |
| [XML] | Tim Bray (Textuality and Netscape), Jean Paoli (Microsoft), C. M. Sperberg-McQueen (University of Illinois, Chicago), Eve Maler (Sun Microsystems, Inc.): "Extensible Markup Language (XML) 1.0" (Second Edition). http://www.w3.org/TR/REC-xml |
| [XMLHandbook] | Charles F. Goldfarb, Paul Prescod: "The Definitive XML Series", publication date: November 3, 2000, ISBN: 0-13-055068-X. |
| [XMLSCHEMA] | "XML schema Part 0: Primer", W3C Recommendation, 2 May 2001. http://www.w3.org/TR/xmlscheme0/ |
| [XSL] | Extensible Stylesheet Language. http://www.w3.org/Style/XSL/ |
| [XSLT] | James Clark: "XSL Transformations (XSLT)" (Version 1.0). http://www.w3.org/TR/xslt |

**Claims**

1. A system implemented on an application server (102) connected to a network, comprising:

   - at least one transformation pipeline (2410) which comprises
   - at least one adapter module (1100), if information has to be aggregated, applied at the beginning of the transformation pipeline (2410) to retrieve input information comprising current context information (102b), content and style of XML documents, database entries and/or document-based applications (102a) requested by said mobile users (104), and
   - at least one processing module (1200) used for a transformation (102c) of the retrieved context information (102b), content and style of said XML documents, database entries and/or document-based applications (102a),

   **characterized in that**
   said system (3704) performs a context-aware adaptation (800) of said service-specific information and retrieved XML documents, database entries and/or document-based applications (102a) to the preferences of said mobile users (104a), the characteristics and capabilities of their mobile devices (104b) and/or different application scenarios.

2. A system according to claim 1,
   **characterized in that**
   each processing module (1200) comprises

   - at least one adaptation unit (1200b/c/d) needed for a transformation (102c) of context information (102b), content and style of requested XML documents (102a), and
   - at least one logical unit (1200a) which analyzes the input information, initializes and controls said adaptation units (1200b/c/d).

3. A system according to anyone of the claims 1 and 2,
   **characterized by**
   enrichment processing modules (1300a) at any position within said transformation pipeline (2410) where processing modules (1200) are allowed, allowing an incremental enrichment of context, content and style of requested information, database entries and/or document-based applications (102a) resulting in an adaptation process (102c), which can be independent from the current context (102b).

4. A system according to anyone of the claims 2 and 3,
   **characterized in that**

the semantics of said processing module (1200) is either a fix part of the logical unit (1200a) or passed as a set of different parameters during the initialization process.

**5.** A system according to anyone of the claims 1 to 4,
**characterized by**
selective enrichment processing modules (1300b) at any position within the transformation pipeline (2410)

- to enrich the information streams (102a+b) being on the transformation pipeline (2410), and/or
- to switch between different content providers (108) depending on context information (102b), content and/or style of requested XML documents, database entries and/or document-based applications (102a).

**6.** A system according to anyone of the claims 1 to 5,
**characterized by**
extractive enrichment processing modules (1300c) at any position within the transformation pipeline (2410)

- to enrich information streams (102a+b) being on the transformation pipeline (2410), and/or
- to extract information from the requested content and/or style of XML documents, database entries and/or document-based applications (102a) requested by said mobile users (104) at the time of a user request.

**7.** A system according to anyone of the claims 3 to 6,
**characterized by**
selective non-extractive enrichment processing modules (1300d), which are designed to combine the features of said enrichment processing modules (1300a) and selective enrichment processing modules (1300b).

**8.** A system according to anyone of the claims 3 to 6,
**characterized by**
non-selective extractive enrichment processing modules (1300e) having the ability to extract information from the content and/or style of requested XML documents, database entries and/or document-based applications (102a).

**9.** A system according to anyone of the claims 1 to 8,
**characterized by**
reductive processing modules (1300f) for reducing parts of the input information (102a+b), which have to be initialized by a value and/or expression determining which part of said input information (102a+b) has to be reduced.

**10.** A system according to anyone of the claims 1 to 9,
**characterized by**
restructive processing modules (1300g) for a restructuralization of said input information (102a+b), which have to be initialized by a value and/or expression which determines what kind of restructuralization has to be performed, and how this restructuralization has to be performed.

**11.** A system according to anyone of the claims 1 to 10,
**characterized by**
the set-up of said transformation pipeline (2410) based on current context information (102b) concerning said XML documents, database entries and/or document-based applications (102a) at each time a user request is received.

**12.** A system according to anyone of the claims 1 to 11,
**characterized in that**
each processing module (1200) and/or each adapter module (1100) is designed to make decisions based on its specific input information (102a+b).

**13.** A system according to anyone of the claims 1 to 12,
**characterized by**
an adaptation (800) of style associated with the content of requested XML documents, database entries and/or document-based applications (102a) that can be accessed via at least one mobile network, the Internet (106) and/or said corporate network (102a) based on the current context information (102b) assigned to said XML documents, database entries and/or document-based applications (102a).

**14.** A system according to anyone of the claims 1 to 13,

**characterized by**
a Pipeline Description Language (PDL) and a Pipeline Description Processing Language (PDPL) to describe, process and exchange information streams (102a+b) between said adapter modules (1100) and said processing modules (1200).

15. A system according to anyone of the claims 1 to 14,
**characterized in that**
it is based on a Web technology offering mechanisms for an import and inclusion of XSLT stylesheet transformations (102c), each associated with content and style of a first XML document (102a) or context information stored in a second XML document (102b), respectively, which allow to combine XML documents (102a+b) without changing the semantics of the XML documents (102a+b) being combined.

16. A method for providing mobile users (104a) with service-specific information, XML documents, database entries and/or document-based applications (102a) that can be accessed via at least one mobile network, the Internet (106) and/or any corporate network,
**characterized in that**
a system according to anyone of the claims 1 to 15 is used.

17. A multimedia document browser application software for displaying XML documents and/or running document-based applications (102a) retrieved from an application server (102) connected to the Internet (106) and/or any corporate network on a client terminal (104b),
**characterized in that**
a system (3704) according to anyone of the claims 1 to 15 is used.

18. A multimedia document browser application software according to claim 17,
**characterized in that**
it implements a method for operating a framework (3704) according to claim 16.

19. A client-server system of a mobile computing environment consisting of mobile clients (104b) and at least one application server (102),
**characterized in that**
at least one client (104b) comprises a system (3704) according to anyone of the claims 1 to 15.

20. A client-server system according to claim 19,
**characterized in that**
at least one client (104b) is programmed to perform a method according to claim 16.

FIG. 1

200

FIG. 2

300

Style-
Sheet    102b

103

102d    Result
Document

Transformation
Process

102c

102a    Source
Document

FIG. 3

FIG. 4

FIG. 5

```
<?xml version="1.0"?>

<cxdl:contextdata>
 < cxdl:ApplicationContext> ... </ cxdl:ApplicationContext>
 < cxdl:DeviceContext> ... </ cxdl:DeviceContext>
 < cxdl:UserContext>
   <cxdl:EnvironmentalSensor uri="http://www.sony.com/WebObject"/>
   <rdf:RDF>
      <dc:title>Sony Community Portal</dc:title>
      <dc:content>Personal Home Portal</dc:content>
      <dc:user>schramm</ dc:user>
   </rdf:RDF>
   </ cxdl:EnvironentalSensor>
 </ cxdl:UserContext>
</ cxdl:ContextData>
```

FIG. 6

EP 1 327 940 A1

700

```
<?xml version="1.0"?>

< cxdl:contextdata>
  < cxdl:ApplicationContext> ... </ cxdl:ApplicationContext>
  < cxdl:DeviceContext> ....</ cxdl:DeviceContext>
  < cxdl:UserContext>
    <mg:userid>foo</mg:userid>
    <cs:movies>
      <cs:movie name="fooA"/>
      <cs:movie name="fooA"/>
    </cs:movies>
  </ cxdl:UserContext>
</ cxdl:ContextData>
```

FIG. 7

800

102b
User's Context

102c

108
Content
Provider

Adaptation

104a
User

FIG. 8

EP 1 327 940 A1

$900$

Adaptation
Process $800$

Personalized
Content
$102d$

Content
Provider A $108$

Content
Provider B $108$

| Rendition | Prerendering | Personalization +Service Logic | Source Adaptation | Source Aggregation |
|---|---|---|---|---|
| $800e$ | $800d$ | $800c$ | $800b$ | $800a$ |

FIG. 9

1000

```
<?xml version="1.0"?>

<pdl:information
  xmlns = "http://www.sony.com/PDL#">

  <pdl:stream type="context">Context Information</stream>
  <pdl:stream type="content">Content Information</stream>
  <pdl:stream type="style">Style Information</stream>
</pdl:information>
```

FIG. 10

1100

1100b
1100a
Logic

1100c

Context

Sent to 104b    102b    Context    Context Adapter

102b    Context + Style, retrieved from
Content Provider    108

Sent to 104b {    102d    Content    Content Adapter    102a

102d    Style    Style Adapter    102a
1100d

Information flow

FIG. 11

FIG. 12

FIG. 13

1400

```
<?xml version="1.0"?>

<pdl:information>
  <!-- other streams -- >
  <pdl:stream type="content">
    <ADVVERTISEMENT type="spot"/>
      <!-- content retrieved from the
           service specific Content Provider -- >
    <ADVERTISEMENT type="spot"/>
  </stream>
  <!-- other streams -- >
</pdl:information>
```

FIG. 14

EP 1 327 940 A1

*1500*

```
<?xml version="1.0"?>

<pdl:information>
  <!-- other streams -- >
  <pdl:stream type="content">
    <mediaitem uri="..."/>
      <!-- content retrieved from the
           service specific Content Provider -- >
    <mediaitem uri="..."/>
  </stream>
  <!-- other streams -- >
</pdl:information>
```

FIG. 15

FIG. 16

1700

```
AdapterModule ("context", "<context> ... </context>",
            "content", "http://www.cinemaprovider.com/program?state=content",
            "style", "http://www.cinemaprovider.com/program?state=style");

ReductivePM("/information/content//fooA", "/information/content//fooB");

RestructivePM("/information/content/", "sort", "default");
```

FIG. 17

FIG. 18

*1900*

*1200a* *1200b/c/d*

| Logical Unit::Server Page | Adaptation Unit::XSLT Engine |

*1802a* input information / reqest

_jspService

Input
Information +
Server Page
output

Modification
form the state of
the art usage

input information = XSLT source
server page output =style sheet
output information = XSLT output

output
information

*1802b* output information/ response

FIG. 19

```
<%@page %>

<%--
   Logical Part, assume that $context_input, $content_Input, $style_input are variables
   referencing to the associated input information context, content, style respectively
--%>

<%  boolean isAudioPreferred = $context_input/isAudioPreferred; %>

<%-- Adaptation Part, evaluate later by a XSLT processor --%>

<xsl:stylesheet>
 <xsl:template match="information">
  <information>
    <%-- Context Adaptation Part --%>
    <context>
      <%= $context_input%>
    </context>
    <%-- Content Adaptation Part --%>
    <content>
      <% if (isAudioPreferred) { %>
        <mediaitem type="audio" src="..." ../>
      <% } %>
    </content>
    <%-- Style Adaptation Part--%>
    <style>
      <%= $style_input%>
    </style>
  </information>
 </xsl:template>
</xsl:stylesheet>
```

FIG. 20

EP 1 327 940 A1

EP 1 327 940 A1

2100

```
<?xml version="1.0"?>

<information>
 <context>
   < ! -- not modified  context -- >
 </context>
 <content>
  <mediaitem type="audio" src="..." ../>
 </content>
 <style>
  < ! -- not modified  context -- >
 </style>
</information>
```

FIG. 21

2200

```
<%@page %>

<%--
 Logical Part, assume that $context_input, $content_input, $style_input are variables
 referencing to the associated input information context, content, style respectively
--%>

<%
    String arg = request.getParameter("argument");
    String expression = calculateExpression(arg);
    // At the end the expression looks like e.g. '//information/content/fooA | //information/content/fooB'
%>

<%-- Adaptation Part, evaluate later by a XSLT processor --%>

<xsl:stylesheet>
 <xsl:template match="information" priority="0.5">
  <information>
    <%-- Context Adaptation Part --%>
    <context>
        <%= $context_input%>
    </context>

    <%-- Content Adaptation Part replacing the old content with the new one --%>
    <content>
        <xsl:apply-template match="<%= expression %>"/>
    </content>
    <% -- Style Adapation Part, passing the Input to the output --%>
    <style>
        <%= $style_input%>
    </style>
  </information>
 </xsl:template>

 <xsl:template match="<%= expression%>
  <xsl:apply-template/>
 </xsl:template>
</xsl:stylesheet>
```

FIG. 22

EP 1 327 940 A1

FIG. 23

FIG. 24

EP 1 327 940 A1

2500

2504

$P_1$

2504

$P_2$

2504

$P_3$

2506

if (... and ... or ...)

if ... and ... or ...

if ... and ... or ...

First Match

2502

$k_1$ | $k_2$ | $k_3$ | ... | $k_0$

FIG. 25

2406
**ProcessFinder**

2600

Context 1026

PipeDescription
Resource 2602

resolving
pipe description
2504b

resolving
pipe descriptor
2504a

## FIG. 26

FIG. 27

2800

```
<% @ page %>

<%
    boolean isAudio = request.getParameter("isAudioPreferred");
%>

<xsl:stylesheet>
<xsl:template match="foo">
<% if (isAudio) { %>
    <audio src="foo.wav"/>
<% } %>
</xsl:template>
</xsl:stylesheet>
```

FIG. 28

EP 1 327 940 A1

2900

```
<?xml version="?">

<inputdocument>
  <foo>
</inputdocument>
```

FIG. 29

3000

```
<?xml version="?>

<inputdocument>
 <audio src="foo.wav"/>
</inputdocument>
```

FIG. 30

3100

```
<?xml version="1.0"?>

<RDF xmlns="http://www.w3.org/1999/02/22-rdf-syntax-ns#">
  <rdf:RDF>
    <rdf:Description about="Processing Module B">
      <s:Input>XML Schema A</s:Input>
      <s:Output>XML Schema B</s:Output>
    </rdf:Description>
  </rdf:RDF>
</RDF>
```

FIG. 31

*3200*

```
<?xml version="1.0"?>

<cxdl:contextdata
      xmlns:cxdl="http://www.sony.com/cxdl#">
  <cxdl:ApplicationContext>...</cxdl:ApplicationContext>
  <cxdl:DeviceContext> ... </cxdl:DeviceContext>
  <cxdl:UserContext>...</cxdl:UserContext>
   <!--further context information -->
</cxdl:ContextData>
```

FIG. 32

```
<?xml version="1.0"?>

<xsl:stylesheet xmlns:cntrl="http://www.sony.org/2001-10-05/ctrl#">
  <xsl:variable name="service" select="contextdata/applicationcontext/service"/>

  <xsl:template match="/">
    <cntrl:PipelineProcessingDescriptor>
      <xsl:choose>
        <xsl:when test="$service="foo" and $state="A">
          <cntrl:Pipe id="fooA"/>
          <cntrl:content-type>application/adl</content-type>
          ... <!—further meta information of the TransformationPipe ->
        </xsl:when>
        <xsl:when test="$service="foo" and $state="B">
          <cntrl:Pipe id="fooB"(>
          <cntrl:content-type>text/xml</content-type>
          ... <!—further meta information of the TransformationPipe ->
        </xsl:when>
      <xsl:choose>
    </cntrl:PipelineProcessingDescriptor>
  </xsl:template>
</xsl:stylesheet>
```

FIG. 33

EP 1 327 940 A1

3400

```
<?xml version="1.0"?>

<xsl:stylesheet xmlns:cntrl="http://www.scny.org/2001-10-05/ctrl#">

 <xsl:template match="ctrl:Transformation">
  <xsl:if test="@id = 'fooA'">
   <cntrl:ProcessingModule>
    <cntrl:input>XML Schema A</ cntrl:input>
    <cntrl:output>XML Schema B</ cntrl:output>
   </cntrl:ProcessingModule>
   <cntrl:ProcessingModule>
    <cntrl:input>XML Schema B</ cntrl:input>
    <cntrl:output>XML Schema C</cntrl:output>
   </cntrl:ProcessingModule>
  </xsl:if>
 <xsl:template>
<xsl:template>
```

FIG. 34

EP 1 327 940 A1

*3500*

```
<?xml version="1.0"?>

<PipeDescription>
 <cntrl:ProcessingModule>
  <cntrl:input>XML Schema A</ cntrl:input>
  <cntrl:output>XML Schema B</ cntrl:output>
 <cntrl:ProcessingModule>
 <cntrl:ProcessingModule>
  <cntrl:input>XML Schema B</cntrl:input>
  <cntrl:output>XML Schema C</cntrl:output>
 <cntrl:ProcessingModule>
</PipeDescription>
```

FIG. 35

abstraction                    rendition

conception

&lt;Q-AND-A&gt;

&lt;QUESTION&gt;              &lt;ANSWER&gt;

representation

```
<Q-AND-A>
<QUESTION>What's XML?
</QUESTION>
<ANSWER>It's a long story,
there is a book I can
recommend...</ANSWER>
</Q-AND-A>
```

```
<tr valign=top>
<td align=right vali
<font size="+3">Q</t
<td align=left valig
What's XML?</td>
</tr>
<tr valign=top>
<td align=right vali
<font size="+3">A</t
<td align=left valig
It's a long story, b
there is a book I ca
recommend...</td>
</tr>
```

notation          XML                    HTML

## FIG. 36

EP 1 327 940 A1

*3700*

(1) Service request, containing user preferences and device capabilities.

(2) Requested information is adapted based on the user's current situation (context).

(3) An AMIL document (Adaptive Multimedia Integration Language) is passed back. The AMIL capable browser is in charge of displaying the document.

(4) Media information and adaptation possibilities are passed to the middleware.

(5,6) After taking an adaptation decision, the selected media objects are started.

(7) The application is informed about the media adaptation process by adaptation events.

(8) The adaptation process monitors the resource situation and takes adaptation decisions, each resulting in the execution of the steps 5 to 7.

FIG. 37

**European Patent Office**

## EUROPEAN SEARCH REPORT

Application Number

EP 02 00 0533

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01 86462 A (LEAP WIRELESS INTERNATIONAL IN) 15 November 2001 (2001-11-15)<br>* abstract *<br>* figure 5 *<br>* page 4, line 4 – page 5, line 15 *<br>* page 7, line 10 – line 21 *<br>* page 16, line 6 – page 20, line 6 * | 1-20 | G06F17/30<br>H04L29/08 |
| X | WO 01 89171 A (MOELLER SCOTT ;NDILI AWELE (US); MSHIFT INC (US))<br>22 November 2001 (2001-11-22)<br>* abstract *<br>* page 1, line 28 – page 3, line 9 *<br>* page 5, line 5 – page 7, line 6 *<br>* page 10, line 5 – line 15 *<br>* figure 1 * | 1-20 | |
| A | EP 0 949 571 A (XEROX CORP)<br>13 October 1999 (1999-10-13)<br>* abstract *<br>* page 3, line 25 – page 4, line 31 *<br>* page 5; table 1 *<br>* page 9, line 38 – line 51 * | 1-20 | |
| A | OUAHID H ET AL: "CONVERTING WEB PAGES INTO WELL-FORMED XML DOCUMENTS"<br>ICC '99. 1999 IEEE INTERNATIONAL CONFERENCE ON COMMUNICATIONS. CONFERENCE RECORD. VANCOUVER, CA, JUNE 6 – 10, 1999, IEEE INTERNATIONAL CONFERENCE ON COMMUNICATIONS, NEW YORK, NY: IEEE, US, vol. 1, 6 June 1999 (1999-06-06), pages 676-680, XP000898349<br>ISBN: 0-7803-5285-8<br>* the whole document * | 1-20 | **TECHNICAL FIELDS SEARCHED (Int.Cl.7)**<br><br>H04L<br>G06F |

The present search report has been drawn up for all claims

| Place of search | Date of completion of the search | Examiner |
|---|---|---|
| MUNICH | 24 May 2002 | Lebas, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 02 00 0533

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2002

| Patent document cited in search report | | Publication date | Patent family member(s) | | Publication date |
|---|---|---|---|---|---|
| WO 0186462 | A | 15-11-2001 | AU<br>WO | 5959001 A<br>0186462 A1 | 20-11-2001<br>15-11-2001 |
| WO 0189171 | A | 22-11-2001 | AU<br>WO<br>US | 6163601 A<br>0189171 A2<br>2001044849 A1 | 26-11-2001<br>22-11-2001<br>22-11-2001 |
| EP 0949571 | A | 13-10-1999 | EP<br>JP | 0949571 A2<br>2000076473 A | 13-10-1999<br>14-03-2000 |

For more details about this annex : see Official Journal of the European Patent Office, No. 12/82